(19) Europäisches Patentamt
European Patent Office
Office européen des brevets

(11) **EP 4 529 204 A1**

(12) **EUROPEAN PATENT APPLICATION**

(43) Date of publication:
**26.03.2025 Bulletin 2025/13**

(21) Application number: **24201915.6**

(22) Date of filing: **23.09.2024**

(51) International Patent Classification (IPC):
**H04N 23/661** (2023.01)

(52) Cooperative Patent Classification (CPC):
**H04N 23/661**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.09.2023 JP 2023160062**

(71) Applicant: **Ricoh Company, Ltd.**
**Tokyo 143-8555 (JP)**

(72) Inventor: **HYO, Kiyohiro**
**Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(54) **IMAGE CAPTURING APPARATUS, INFORMATION PROCESSING SYSTEM, AND METHOD FOR TRANSMITTING INFORMATION**

(57) An image capturing apparatus (10) includes: an imaging unit (101) configured to capture an image to obtain a captured image; and a transmitting and receiving unit (11) configured to transmit other information different from the captured image to a transmission destination apparatus (50) via one transmission path among a first transmission path that passes through an intermediary apparatus (90) and a second transmission path that does not pass through the intermediary apparatus (90), the other information being determined based on the one transmission path.

## FIG. 1

IMAGE PROCESSING SYSTEM 1

SERVER 50

100

COMMUNICATION NETWORK

IMAGE CAPTURING APPARATUS 10

COMMUNICATION TERMINAL 90

EP 4 529 204 A1

**Description**

BACKGROUND

Technical Field

The present disclosure relates to an image capturing apparatus, an information processing system, and a method for transmitting information.

Related Art

Edge devices such as cameras include an edge device that can selectively use a plurality of upload paths along which information on the device and data stored in the device, such as files and images, can be uploaded to a cloud server not only indirectly via an intermediary apparatus such as a smartphone or a personal computer (PC), but also directly without using an intermediary apparatus.

Japanese Unexamined Patent Application Publication No. 2022-081952 describes a distributed system. In the distributed system, an edge device and a computer such as a cloud server operate in cooperation with each other to address an internal state of a controller in the edge device to generalize data communication for cooperation between the edge device and the computer and reduce an amount of data communication.

The technique described above enables collection of data using a plurality of paths or networks. However, the technique does not take into account optimum data collection or data processing according to the plurality of paths.

SUMMARY

Example embodiments include an image capturing apparatus including an imaging unit and a transmitting and receiving unit. The imaging unit captures an image to obtain a captured image. The transmitting and receiving unit transmits other information different from the captured image to a transmission destination apparatus via one transmission path among a first transmission path that passes through an intermediary apparatus and a second transmission path that does not pass through the intermediary apparatus. The other information is determined based on the one transmission path.

Example embodiments include an information processing system including the above-described image capturing apparatus and the above-described transmission destination apparatus. The transmission destination apparatus includes a transmitting and receiving unit that receives the other information from the image capturing apparatus via the one transmission path among the first transmission path and the second transmission path.

Example embodiments include a method for transmitting information, performed by an image capturing apparatus, including: capturing an image to obtain a captured image; and transmitting other information different from the captured image to a transmission destination apparatus via one transmission path among a first transmission path that passes through an intermediary apparatus and a second transmission path that does not pass through the intermediary apparatus, the other information being determined based on the one transmission path.

With the above-described configuration, in transmission of information from the image capturing apparatus to the transmission destination apparatus, optimum data collection and data processing can be performed based on a transmission path.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1 is a diagram illustrating an example of a general arrangement of an image processing system according to one or more embodiments;
FIG. 2 is an illustration of an example of a spherical image captured by an image capturing apparatus;
FIG. 3A is an illustration of an example hemispherical image (front side) captured by the image capturing apparatus;
FIG. 3B is an illustration of an example hemispherical image (back side) captured by the image capturing apparatus;
FIG. 3C is an illustration of an image in equirectangular projection according to an embodiment;
FIG. 4A is a conceptual illustration of an example of how the image in equirectangular projection is mapped onto a surface of a sphere;
FIG. 4B is an illustration of an example spherical image;
FIG. 5 is a view illustrating positions of a virtual camera and a predetermined area in an example case in which the spherical image is represented as a three-dimensional solid sphere;
FIG. 6 is an illustration of a relationship between predetermined-area information and an image of the predetermined area according to an embodiment;
FIG. 7 is a diagram illustrating an example of a state of the image capturing apparatus at the time of capturing an image;
FIGs. 8A and 8B are illustrations of examples of the spherical image;
FIGs. 9A and 9B are illustrations of examples of a planar image converted from the spherical image;
FIGs. 10A and 10B are schematic views of examples of an image capturing apparatus applicable to the image processing system;

FIG. 11 is a block diagram illustrating an example hardware configuration of the image capturing apparatus;

FIG. 12 is a block diagram illustrating an example hardware configuration of a server and a communication terminal;

FIG. 13 is a block diagram illustrating an example functional configuration of the image processing system;

FIGs. 14A and 14B are diagrams illustrating other example functional configurations of the communication terminal;

FIGs. 15A, 15B, and 15C are illustrations of examples of an account management table;

FIGs. 16A, 16B, and 16C are illustrations of examples of a setting information management table;

FIG. 17 is an illustration of an example of a device information management table;

FIG. 18 is a sequence diagram illustrating an example of a registration process for server direct transmission;

FIGs. 19A and 19B are sequence diagrams illustrating an example of server direct transmission of an image and an example of server direct transmission of device information, respectively, according to an embodiment of the present disclosure;

FIG. 20 is a sequence diagram illustrating an example of a registration process of an intermediary of transmission and reception;

FIG. 21 is a sequence diagram illustrating an example of a process for mediating the transmission and reception of an image;

FIG. 22 is a sequence diagram illustrating an example of a process for mediating the transmission and reception of device information;

FIG. 23 is a sequence diagram illustrating another example of a registration process of an intermediary of transmission and reception;

FIG. 24 is a sequence diagram illustrating another example of a process for mediating the transmission and reception of an image;

FIG. 25 is a sequence diagram illustrating another example of a process for mediating the transmission and reception of device information;

FIG. 26 is a sequence diagram illustrating an example of a process for displaying device information;

FIG. 27 is a sequence diagram illustrating another example of a process for displaying device information;

FIG. 28 is a flowchart illustrating an example of an image transmission process performed by the image capturing apparatus;

FIGs. 29A and 29B are flowcharts illustrating an example of an image transmission and reception process performed by the communication terminal and an image reception process performed by the server, respectively;

FIG. 30 is a flowchart illustrating an example of a device information transmission process performed by the image capturing apparatus;

FIGs. 31A and 31B are illustrations of examples of a display screen of device information;

FIG. 32 is an illustration of an example of a display screen of the device information;

FIG. 33 is an illustration of another example of a display screen of the device information;

FIG. 34 is a diagram illustrating an example of a general arrangement of an image processing system according to a modification; and

FIG. 35 is a diagram illustrating an example of a general arrangement of an image processing system according to a second modification.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Overview of Image Processing System

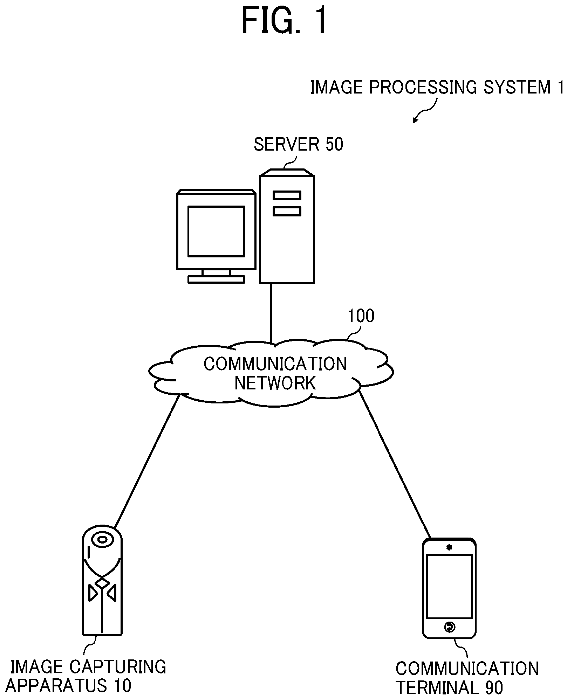

FIG. 1 is a diagram illustrating an example configuration of an image processing system 1 according to one or more embodiments. The image processing system 1 illustrated in FIG. 1 is an example of an information processing system, which performs image processing on a captured image for allowing a viewer to view, by online, an interior space of a structure such as a real estate property or a building or a structure such as construction or civil engineering.

As illustrated in FIG. 1, the image processing system 1 includes an image capturing apparatus 10, a server 50, and a communication terminal 90. The server 50 and the communication terminal 90 included in the image processing system 1 communicates with each other via a communication network 100. The image capturing apparatus 10 can communicate with the communication terminal 90 by short-range wireless communication such as Wireless Fidelity (Wi-Fi®), but may communicate with the server 50 and the communication terminal 90 via the communication network 100. The communication network 100 includes the Internet, a mobile communication network, and a local area network (LAN), for example. The communication network 100 may include a wired communication network and a wireless communication network. The wireless communication network may be based on a wireless communication standard such as third generation (3G), fourth generation (4G), fifth generation (5G), Wi-Fi®, Worldwide Interoperability for Microwave Access (WiMAX), or Long Term Evolution (LTE).

The server 50 is an example of an information processing apparatus and a transmission destination apparatus. The server 50 is a server computer that performs image processing on a captured image of an interior space of a structure such as a real estate property or a building, which is a predetermined site, or a structure in a field such as construction or civil engineering. For example, the server 50 obtains a captured image captured by the image capturing apparatus 10 and generates a tour image to provide a virtual tour to a user, by using the obtained captured image. The virtual tour is content that allows a user to view, for example, a real estate property as if the user were actually viewing the real estate property on the site. The tour image is generated by using a plurality of captured images that are captured by the image capturing apparatus 10. The tour image is an image for a user's viewing, and allows the user to virtually navigate within the site corresponding to the captured image according to an operation of the user. Such virtual tours can feasibly be implemented for exterior spaces of structures, such as tourist spots and theme parks, as well as interior spaces of structures of real estate properties or buildings. In other words, an interior space of a structure can be regarded as being within a predetermined area. When a virtual tour is carried out in an exterior space of a structure, the present embodiment can be implemented by replacing a map indicating an interior space of a structure of a real estate property or a building, which is described later, with a tourist spot map introducing a tourist spot or an area map of a theme park, for example.

The server 50 may be implemented by a single server computer or may be implemented by a plurality of server computers. In the following, the server 50 is described as a server computer residing on a cloud environment. In some embodiments, the server 50 may be a server residing on an on-premises environment.

The image capturing apparatus 10 is an example of an information processing apparatus and a transmission source apparatus. The image capturing apparatus 10 is a special digital camera (spherical image capturing apparatus) that can obtain a spherical image (360-degree image in both the circumferential direction and the vertical direction) by capturing an image of a space in all directions in an image capturing site where a structure such as a real estate property is present. The following description uses a structure such as a real estate property as an example. In another example, as described above, an interior space of a structure such as a building or a structure in a field such as construction or civil engineering may be used.

In one embodiment, the image capturing apparatus 10 obtains the spherical image. In another embodiment, the spherical image may be obtained by the communication terminal 90 having a function of obtaining a spherical image. In another embodiment, a camera attachment for obtaining a spherical image may be connected to the communication terminal 90, and the communication terminal 90 and the camera attachment may be used to obtain the spherical image. In other words, the transmission source apparatus is an apparatus from which the obtained spherical image is transmitted to the server 50.

The spherical image refers to an image having a so-called solid angle $4\pi sr$, where sr stands for steradian.

In the present specification, an image in which a partial area of the spherical image is missing is also referred to as a spherical image for the sake of convenience. Such an image includes, for example, an image in which a part in a direction directly above or below the spherical image capturing apparatus is missing, an image in which a part in a vertically upward direction or a vertically downward direction of the spherical image is missing, and an image in which a part of a predetermined area of the spherical image is missing.

This is because a possible use case is considered in which a user does not carefully view a part that is immediately above or immediately below a subject captured in a spherical image when viewing the spherical image, for example. In such a case, it is also assumed that the spherical image itself is not displayed by designing an imaging element and an optical system so as not to capture the part, by not displaying an image, or by displaying a logo on the part, for example.

The image capturing apparatus 10 is used by, for example, a real estate agent that manages or sells real estate properties. The image capturing apparatus 10 may be a wide-angle camera or a stereo camera that can obtain a wide-angle image having an angle of view equal to or greater than a predetermined value. The wide-angle image is generally an image taken with a wide-angle lens, such as a lens that can take a range wider than a range that the human eyes can perceive. In other words, the image capturing apparatus 10 is an image capturing means that can obtain an image (a spherical image or a wide-angle image) captured using a lens having a focal length shorter than a predetermined value. The wide-angle image is generally an image taken with a lens having a focal length of 35 mm or less in terms of 35 mm film. Further, the image capturing apparatus 10 may have a panoramic image capturing function in the image capturing function, and may capture a panoramic image.

In some cases, the image capturing apparatus 10 may fail to transmit an image directly to the server 50 due to, for example, the communication environment between the image capturing apparatus 10 and the server 50. In such cases, the image is transmitted from the image capturing apparatus 10 to the server 50 via the communication terminal 90.

The communication terminal 90 is an example of an intermediary apparatus and an information processing apparatus, and is a computer such as a tablet terminal. The communication terminal 90 is used by, for example, the same real estate agent as the image capturing apparatus 10. In one example, the communication terminal 90 is installed with a dedicated application for instructing the image capturing apparatus 10 to capture an image and viewing an image provided from the server 50, and a transmission/reception application for mediating the transmission and reception of information between the image capturing apparatus 10 and the server 50.

Alternatively, the communication terminal 90 may issue an image capturing instruction and provide image viewing by accessing a dedicated website using a web browser without the dedicated application. In another example, an additional or a different communication terminal 90 may issue an image capturing instruction and provide image viewing. In the following description, the application may be referred to as "app".

The communication terminal 90 is not limited to a tablet terminal, and may be, for example, a PC, a smartphone, a wearable terminal, a head mount display (HMD), or an interactive white board (IWB: an electronic whiteboard having mutual communication capability).

In the image processing system 1 described above, the image capturing apparatus 10 and the server 50 include an application program interface (API), and the communication terminal 90 includes an application for mediating the transmission and reception of information between the image capturing apparatus 10 and the server 50. This configuration allows an image to be transmitted from the image capturing apparatus 10 to the server 50 via the communication terminal 90, but may have a restriction on the transmission of device information of the image capturing apparatus 10, such as the remaining battery level or the remaining storage level, to the server 50.

For example, when the type, data format, communication protocol, or the like of device information to be transmitted from the image capturing apparatus 10 to the server 50 is changed, there may be a possibility that, for example, the number of types of device information transmitted from the image capturing apparatus 10 to the server 50 via the communication terminal 90 is smaller than the number of types of device information transmitted from the image capturing apparatus 10 directly to the server 50, due to a time lag between an update of the functionality of the image capturing apparatus 10 and development for updating the functionality of an application in the communication terminal 90.

This problem is significant, in particular, when an application developed by a manufacturer different from that of the API (such an application is hereinafter referred to as "third-party developed application") is used. There may be a possibility that the number of types of device information transmitted from the image capturing apparatus 10 to the server 50 via the communication terminal 90 provided with a third-party developed application is smaller than the number of types of device information transmitted from the image capturing apparatus 10 to the server 50 via the communication terminal 90 provided with an application developed by the same manufacturer as the API (such an application is hereinafter referred to as "in-house developed application").

In the situation described above, if the image capturing apparatus 10 uniformly transmits a large number of types of device information to the server 50 regardless of the type of transmission path in such a manner as to perform direct transmission to the server 50, a reception error occurs when the transmission is performed via the communication terminal 90.

In contrast, if the image capturing apparatus 10 uniformly transmits a small number of types of device information to the server 50 regardless of the type of transmission path in such a manner as to perform transmission via the communication terminal 90 provided with a third-party developed application, there is a restriction in which device information that could otherwise be received when the device information is transmitted directly to the server 50 is not receivable.

The problem described above also occurs for image identification information, as well as the device information of the image capturing apparatus 10. That is, the image identification information indicates whether image processing has been performed on an image to be transmitted from the image capturing apparatus 10 or indicates the type of image processing that has been performed on the image. Depending on the compatibility of the application, the image identification information cannot be transmitted or received via the communication terminal 90.

In this situation, if the image capturing apparatus 10 transmits uniformly the image identification information to the server 50 regardless of the type of transmission path in such a manner as to perform direct transmission to the server 50, a reception error occurs when the transmission is performed via the communication terminal 90.

In contrast, unless the image capturing apparatus 10 uniformly transmits the image identification information to the server 50 regardless of the type of transmission path in such a manner as to perform transmission via the communication terminal 90 provided with an application developed by a third party that is the latest developer, the server 50 cannot determine whether the image is a processed image or determine the type of the processed image. This imposes a restriction such that no image processing is performed by the image capturing apparatus 10, but all the image processing is performed by the server 50. The problem described above also occurs in a case where the communication terminal 90 includes an API, as well as in a case where the image capturing apparatus 10 and the server 50 include an API.

As described above, in one or more embodiments of the present disclosure, it is desirable to perform optimum data collection and data processing in accordance with a transmission path in a case where other information such as device information or image identification information is transmitted from an image capturing apparatus to a transmission destination apparatus.

Overview of Image Capturing Apparatus

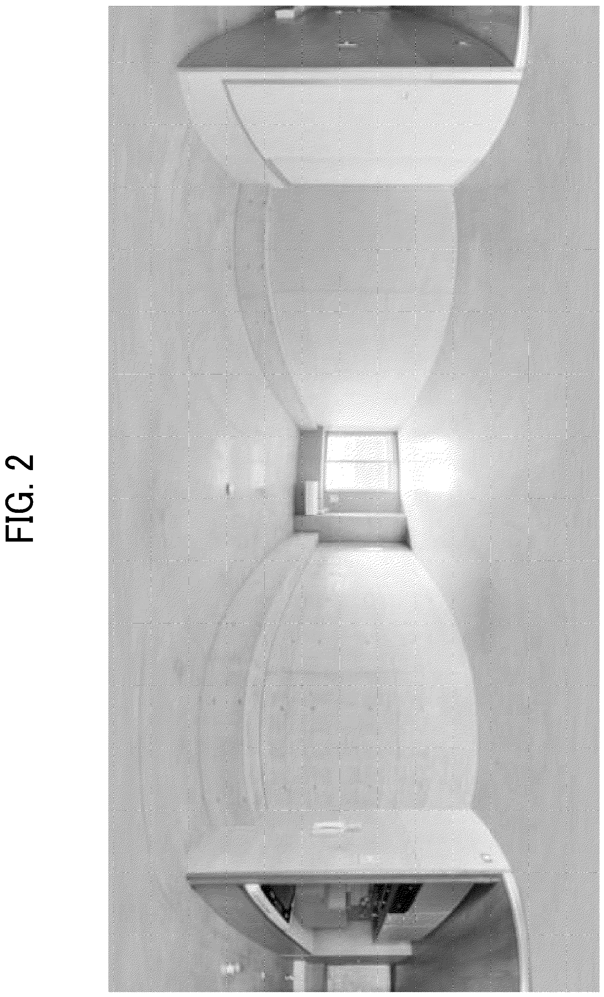

An overview of the image capturing apparatus 10 included in the image processing system 1 is described with reference to FIGs. 2 to 11. FIG. 2 is an illustration of an example of a spherical image captured by the image capturing apparatus 10. The image illustrated in FIG. 2 is a spherical image of a room of a real estate property, which is an example of an interior space of a structure, captured by the image capturing apparatus 10. The spherical image is suitable for, for example, viewing a real estate property, because the inside of a room can be captured in all directions. There are various forms of spherical images, and a spherical image is typically generated by an equirectangular projection, which is described later. The image generated by the equirectangular projection is advantageous in that the outer shape of the image is rectangular and the image data can be stored efficiently and easily, and that the image looks relatively natural because the distortion near the equator is small and the straight line in the vertical direction is not distorted.

Method for Generating Spherical Image

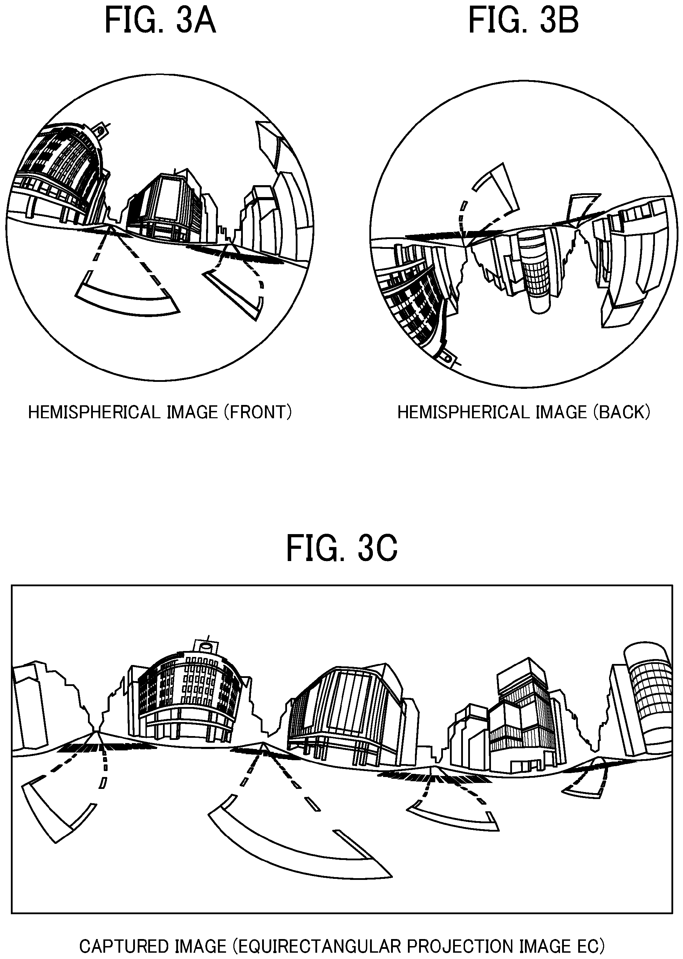

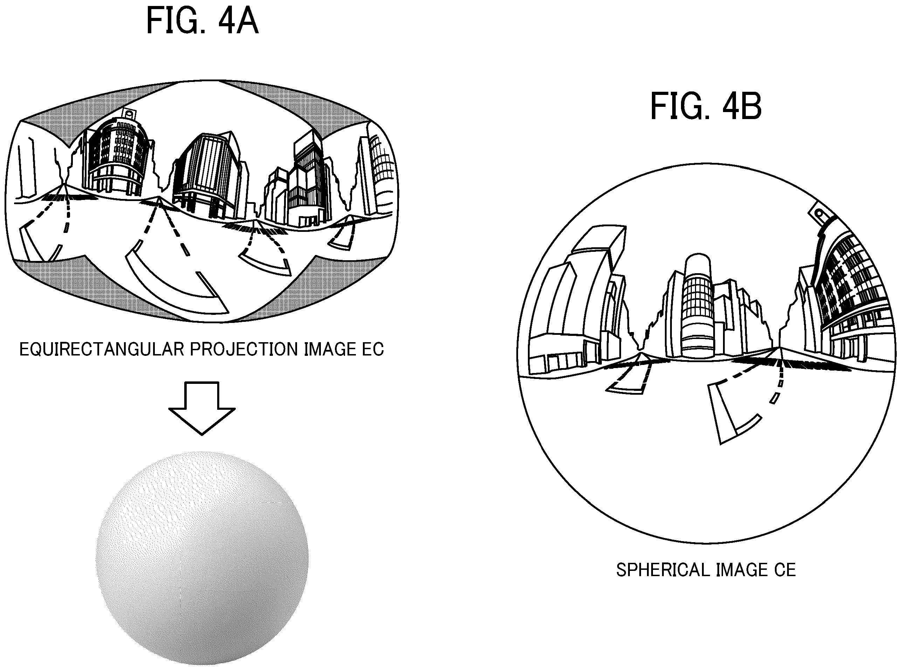

A method for generating a spherical image according to one or more embodiments is described with reference to FIGs. 3A to 9B. First, an overview of an operation of generating a spherical image from images captured by the image capturing apparatus 10 is described with reference to FIGs. 3A to 3C and FIGs. 4A and 4B. FIG. 3A illustrates a hemispherical image (front side) captured by the image capturing apparatus 10. FIG. 3B illustrates a hemispherical image (back side) captured by the image capturing apparatus 10. FIG. 3C illustrates an image in equirectangular projection, which is referred to as an "equirectangular projection image" (or equidistant cylindrical projection image). FIG. 4A conceptually illustrates how the equirectangular projection image is mapped onto a surface of a sphere. FIG. 4B illustrates a spherical image.

The image capturing apparatus 10 is provided with an imaging element on each of a front surface (front side) and a rear surface (rear side) thereof. These imaging elements (image sensors) are used in combination with optical members such as lenses each of which can capture a hemispherical image having an angle of view of 180 degrees or wider. The image capturing apparatus 10 can obtain two hemispherical images by capturing a subject around the user by the two imaging elements.

As illustrated in FIGs. 3A and 3B, the images captured by the imaging elements of the image capturing apparatus 10 are curved hemispherical images (front side and back side). The image capturing apparatus 10 combines the hemispherical image (front side) and the hemispherical image (back side), which are flipped 180 degrees, to generate an equirectangular projection image EC as illustrated in FIG. 3C.

The image capturing apparatus 10 uses Open Graphics Library for Embedded Systems (OpenGL ES) to map the equirectangular projection image EC so as to cover the surface of the sphere as illustrated in FIG. 4A, to generate a spherical image (spherical panoramic image) CE as illustrated in FIG. 4B. That is, the spherical image CE is represented as the equirectangular projection image EC, which corresponds to a surface facing the center of the sphere. OpenGL ES is a graphics library used for visualizing two-dimensional (2D) data and three-dimensional (3D) data.

The spherical image CE may be either a still image or a moving image. Furthermore, the conversion method is not limited to the OpenGL ES, and may be any method of converting a hemispherical image into an equirectangular projection method, for example, a calculation by a central processing unit (CPU) or a calculation by Open Computing Language (OpenCL).

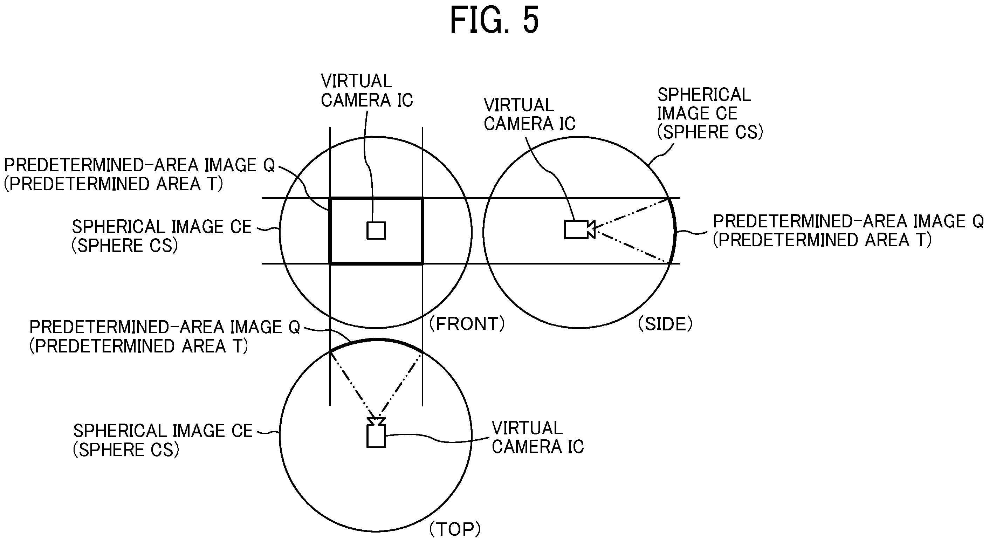

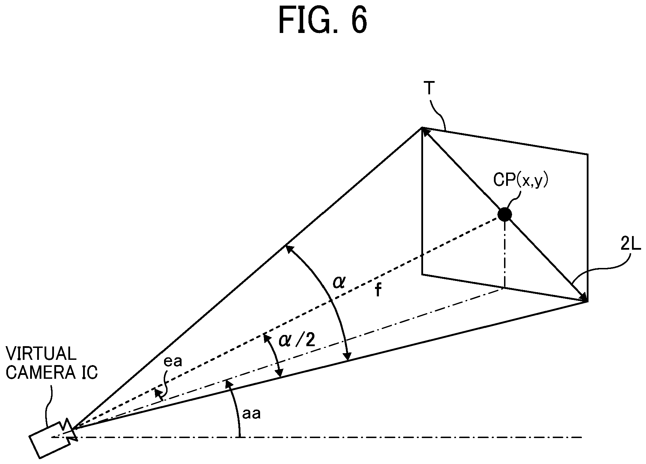

As described above, since the spherical image CE is an image mapped to a sphere in such a manner as to cover the surface of the sphere, part of the image may look distorted when viewed by a user, providing a strange feeling. To resolve this strange feeling, the image capturing apparatus 10 displays an image of a predetermined area T, which is a part of the spherical image CE, as a flat image having fewer curves. The predetermined area is, for example, a part of the spherical image CE that is viewable by the user. In this disclosure, the image of the predetermined area, which is viewable, may be referred to as a "predetermined-area image" or "viewable-area image" Q. That is, the term "predetermined-area image" and "viewable-area image" may be used interchangeably. A description is now given of displaying the viewable-area image, with reference to FIGs. 5 and 6.

FIG. 5 is a view illustrating positions of a virtual camera IC and the predetermined area T in a case in which the spherical image is represented as a three-dimensional solid sphere. The virtual camera IC corresponds to a position of a point of view (viewpoint) of a user who is viewing the spherical image CE represented as a surface area of a three-dimensional solid sphere. In FIG. 5, the spherical image CE is represented as a surface area of a three-dimensional solid sphere CS. Assuming that the spherical image CE generated in the way described above is the surface area of the solid sphere CS, the virtual camera IC is inside the spherical image CE as illustrated in FIG. 5. The predetermined area T in the spherical image CE is an imaging area of the virtual camera IC. Specifically, the predetermined area T is specified by predetermined-area information indicating an image capturing direction and an angle of view of the virtual camera IC in a three-dimensional virtual space containing the spherical image CE. In addition, zooming in or out the predetermined area T is also determined by bringing the virtual camera IC closer to or away from the spherical image CE. A predetermined-area image Q is an image of the predetermined area T in the spherical image CE. The predetermined area T is defined by an angle of view α of the virtual camera IC and a distance f from the virtual camera IC to the spherical image CE.

The predetermined-area image Q is displayed on a predetermined display as an image of the imaging area of the virtual camera IC. In the following description, an image capturing direction (ea, aa) and the angle of view α of the virtual camera IC are used, by way of example. In another example, the predetermined area T is identified by an imaging area (X, Y, Z) of the virtual camera IC, i.e., the predetermined area T, rather than the angle of view α and the distance f.

Referring to FIG. 6, a relationship between the predetermined-area information and the image of the predetermined area T is described. FIG. 6 illustrates a relationship between the predetermined-area information and the image of the predetermined area T. As illustrated in FIG. 6, reference character "ea" represents an elevation angle, reference character "aa" represents an azimuth angle, and reference character "α" represents an angle of view.

The position of the virtual camera IC is adjusted such that the point of gaze of the virtual camera IC, indicated by the image capturing direction (ea, aa), matches a center point CP (x, y) of the predetermined area T as the imaging area of the virtual camera IC. As illustrated in FIG. 6, when it is assumed that a diagonal angle of view of the predetermined area T specified by the angle of view α of the virtual camera IC is α, the center point CP (x, y) provides the parameters (x, y) of the predetermined-area information. The predetermined-area image Q is an image of the predetermined area T in the spherical image CE. Reference character "f" represents the distance from the virtual camera IC to the center point CP (x, y). Reference character "L" represents a distance between the center point CP (x, y) and a given vertex of the predetermined area T (2L is a diagonal line). In FIG. 6, a trigonometric function generally expressed by Formula (1) below is satisfied.

$$L/f = \tan(\alpha/2) \ (1)$$

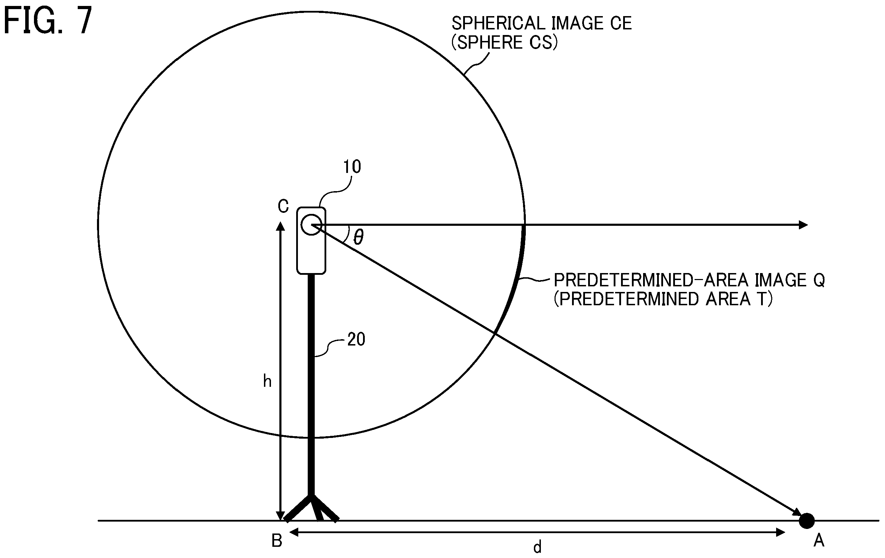

The state of the image capturing apparatus 10 at the time of capturing an image is described with reference to FIG. 7. FIG. 7 illustrates an example state of the image capturing apparatus 10 at the time of capturing an image. In order to capture an image so as to overlook the entire room of a structure such as a real estate property, it is preferable that the image capturing apparatus 10 is set at a position close to the height of human eyes. Accordingly, as illustrated in FIG. 7, the image capturing apparatus 10 is generally fixed by a support member 20 such as a monopod or a tripod to capture an image. As described above, the image capturing apparatus 10 is a spherical image capturing apparatus that can capture light rays in all directions, and can be said to capture an image (spherical image CE) on a unit sphere around the image capturing apparatus 10. When the image capturing direction is determined, the image capturing apparatus 10 determines the coordinates of the spherical image. For example, in FIG. 7, a point A is at a distance (d, -h) away from a center point C of the image capturing apparatus 10, and when an angle formed by a line segment AC and the horizontal direction is θ, the angle θ is expressed by formula (2) as follows.

$$\theta = \arctan(h/d) \ (2)$$

In addition, assuming that the point A is at a depression angle θ, the distance d between the point A and a point B can be expressed by Formula (3) below using a height h at which the image capturing apparatus 10 is set.

$$d = h/\tan\theta \ (3)$$

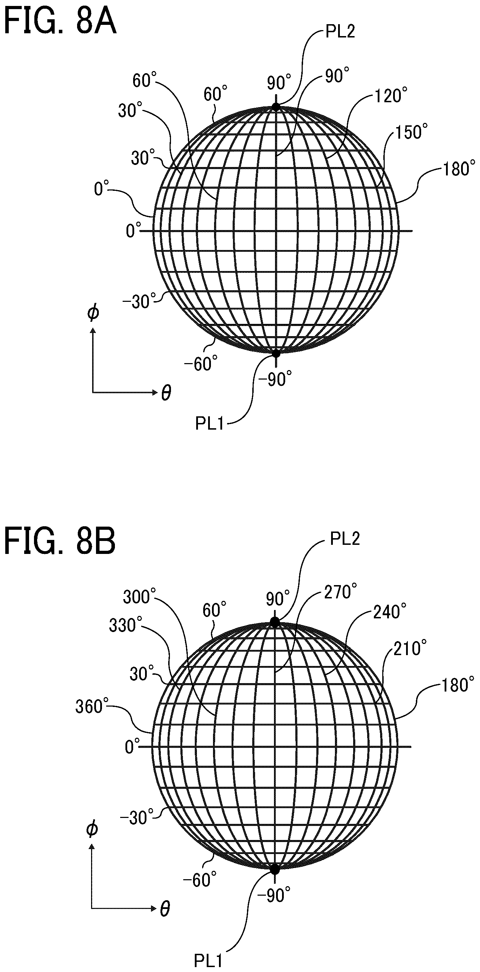

A process of converting position information indicating a position on the spherical image into coordinates on a planar image converted from the spherical image is schematically described. FIGs. 8A and 8B are illustrations of examples of the spherical image. FIG. 8A is an illustration of the hemispherical image illustrated in FIG. 3A on which points at which incident angles in the horizontal direction and the vertical direction with respect to an optical axis are equivalent are connected to each other by lines. In the following description, an incident angle in the horizontal direction with respect to the optical axis is referred to as "θ," and an incident angle in the vertical direction with respect to the optical axis is referred to as "φ."

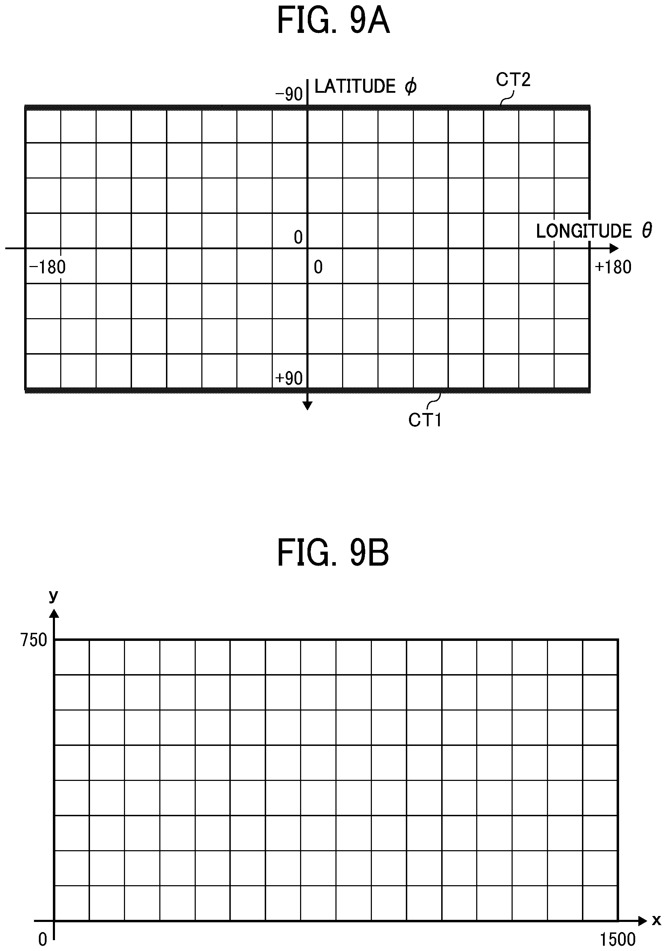

FIG. 9A illustrates an example of an image obtained by processing using equirectangular projection. Specifically, when the images illustrated in FIGs. 8A and 8B are associated with each other using a look up table (LUT) generated in advance, and processed by the equirectangular projection, and the processed images illustrated in FIGs. 8A and 8B are combined. In this way, the image capturing apparatus 10 generates a planar image illustrated in FIG. 9A corresponding to the spherical image. The equirectangular projection image EC illustrated in FIG. 3C is an example of the planar image illustrated in FIG. 9A.

As illustrated in FIG. 9A, in the image processed by the equirectangular projection, the latitude ($\varphi$) and the longitude ($\theta$) are orthogonal to each other. In the example illustrated in FIG. 9A, a position in the spherical image is indicated by setting the center of the image to (0, 0), expressing a latitude direction as a value from -90 to +90, and expressing a longitude direction as a value from -180 to +180. For example, the coordinates of the upper left corner of the image are (-180, -90). The coordinates of the spherical image may be represented in a format using 360 degrees as illustrated in FIG. 9A, or may be represented by radian display or display of the number of pixels as in a real image. Alternatively, the coordinates of the spherical image may be converted into two-dimensional coordinates (x, y) as illustrated in FIG. 9B.

The combining process for obtaining the planar image illustrated in FIGs. 9A or 9B is not limited to the process of simply and continuously arranging the hemispherical images illustrated in FIGs. 8A and 8B. For example, when the horizontal center of the spherical image is not $\theta$ = 180 degrees, the image capturing apparatus 10 first pre-processes the hemispherical image illustrated in FIG. 3A and arranges the hemispherical image at the center of the spherical image in the combining process. Next, the image capturing apparatus 10 may divide an image obtained by pre-processing the hemispherical image illustrated in FIG. 3B into portions of sizes to be arranged as left and right portions of an image to be generated, and combines the hemispherical images to generate the equirectangular projection image EC illustrated in FIG. 3C.

In the planar image illustrated in FIG. 9A, a portion corresponding to the pole point (PL1 or PL2) of the hemispherical image (spherical image) illustrated in FIGs. 8A and 8B is a line segment CT1 or CT2. This is because, as illustrated in FIGs. 4A and 4B, the spherical image (e.g., the spherical image CE) is created by pasting the planar image (the equirectangular projection image EC) illustrated in FIG. 9A on the surface of a sphere by using the OpenGL ES.

Example of Image Capturing Apparatus Applicable to Image Processing System

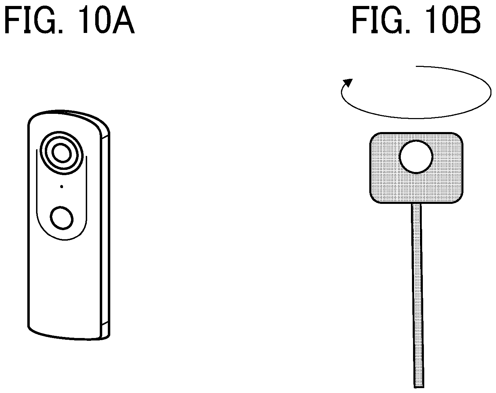

FIGs. 10A and 10B are schematic views of examples of an image capturing apparatus applicable to the image processing system 1. FIG. 10A illustrates a special image capturing apparatus including a plurality of imaging elements that can generate a spherical image by the above-described generation method. The special image capturing apparatus uses an optical system including a wide-angle lens or a fish-eye lens that has a wide angle of view, and can obtain an image captured in all directions by combining outputs of the plurality of imaging elements. FIG. 10B illustrates a general-purpose image capturing apparatus, which is namely a standard camera. The general-purpose image capturing apparatus is, for example, a standard digital camera or a mobile terminal such as a smartphone including a camera. A photographer holds the general-purpose image capturing apparatus in his or her hand and captures images while rotating. The general-purpose image capturing apparatus can obtain an omnidirectional image, namely, an image in all directions, by combining the obtained images. Each of the special image capturing apparatus and the general-purpose image capturing apparatus generates a final captured image by stitching a plurality of imaging results together by image processing (stitching processing). The optical centers of image capturing apparatuses 10 for obtaining a plurality of imaging results may be the same.

Hardware Configuration

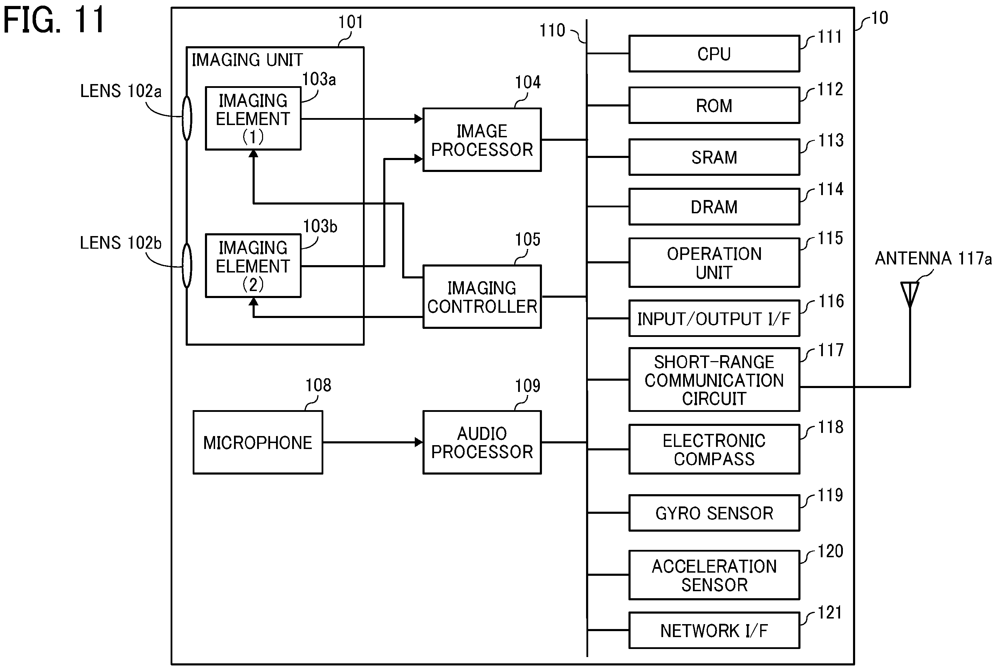

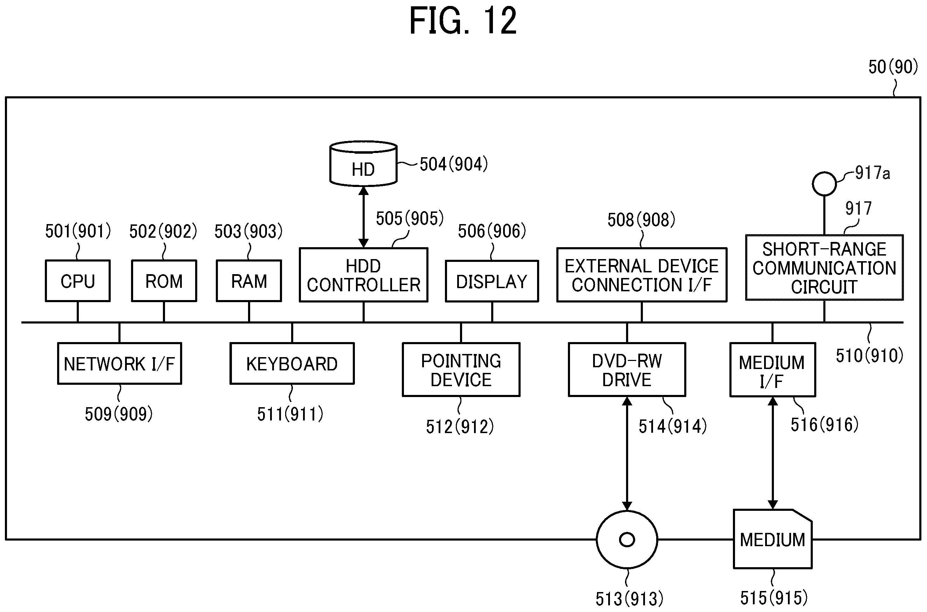

Referring to FIGs. 11 and 12, hardware configurations of each apparatus, device, and terminal of an image processing system according to an embodiment are described. In the hardware configurations illustrated in FIGs. 11 and 12, components or elements may be added or deleted as desired.

Hardware Configuration of Image Capturing Apparatus

First, referring to FIG. 11, a hardware configuration of the image capturing apparatus 10 is described. FIG. 11 is a diagram illustrating an example hardware configuration of the image capturing apparatus 10. The following describes a case in which the image capturing apparatus 10 is a spherical (omnidirectional) image capturing apparatus having two imaging elements. However, the image capturing apparatus 10 may include any suitable number of imaging elements, provided that the image capturing apparatus 10 includes at least two imaging elements. In addition, the image capturing apparatus 10 is not necessarily an image capturing apparatus dedicated to omnidirectional image capturing. Alternatively, an external omnidirectional image capturing unit may be attached to a general-purpose digital camera or a smartphone to implement an image capturing apparatus having substantially the same function as that of the image capturing apparatus 10.

As illustrated in FIG. 11, the image capturing apparatus 10 includes an imaging unit 101, an image processor 104, an imaging controller 105, a microphone 108, an audio processor 109, a CPU 111, a read only memory (ROM) 112, a static random access memory (SRAM) 113, a dynamic random access memory (DRAM) 114, an operation unit 115, an input/output interface (I/F) 116, a short-range communication circuit 117, an antenna 117a for the short-range communication circuit 117, an electronic compass 118, a gyro sensor 119, an acceleration sensor 120, and a network I/F 121.

The image capturing apparatus 10 also includes an image signal processor (ISP), which is a processor for processing a video signal.

The imaging unit 101 includes optical systems (wide-angle lenses or so-called fish-eye lenses) 102a and 102b (collectively referred to as "lens 102" unless otherwise distinguished from each other), each having an angle of view of equal to or greater than 180 degrees so as to form a hemispherical image. The imaging unit 101 further includes two imaging elements 103a and 103b corresponding to the lenses 102a and 102b, respectively. In the description of the present embodiment, a combination of a single optical system and a single imaging element is referred to as an imaging optical system, and the image capturing apparatus 10 can be implemented by arranging two imaging optical systems so as to face each other. The image capturing apparatus 10 may be implemented by using two or more imaging optical systems. The imaging elements 103a and 103b each include an imaging sensor such as a complementary metal oxide semiconductor (CMOS) sensor or a charge-coupled device (CCD) sensor, a timing generation circuit, and a group of registers. The imaging sensor converts an optical image formed by the lens 102a or 102b into electric signals to output image data. The timing generation circuit generates horizontal or vertical synchronization signals, pixel clocks, and the like for the imaging sensor. Various commands and parameters for operations of the imaging elements 103a and 103b are set in the respective groups of registers.

Each of the imaging elements 103a and 103b of the imaging unit 101 is connected to the image processor 104 via a parallel I/F bus. In addition, each of the imaging elements 103a and 103b of the imaging unit 101 is connected to the imaging controller 105 via a serial I/F bus such as an inter-integrated circuit (I2C) bus. The image processor 104, the imaging controller 105, and the audio processor 109 are connected to the CPU 111 via a bus 110. The ROM 112, the SRAM 113, the DRAM 114, the operation unit 115, the input/output I/F 116, the short-range communication circuit 117, the electronic compass 118, the gyro sensor 119, the acceleration sensor 120, and the network I/F 121 are also connected to the bus 110.

The image processor 104 acquires image data from each of the imaging elements 103a and 103b via the parallel I/F bus and performs predetermined processing on the acquired items of image data. Thereafter, the image processor 104 combines these items of image data to generate data of the equirectangular projection image as illustrated in FIG. 3C.

The imaging controller 105 usually functions as a master device while each of the imaging elements 103a and 103b usually functions as a slave device. The imaging controller 105 sets commands in the group of registers of each of the imaging elements 103a and 103b via the I2C bus. The imaging controller 105 receives commands from the CPU 111. The imaging controller 105 further acquires status data of the group of registers of each of the imaging elements 103a and 103b via the I2C bus. The imaging controller 105 sends the acquired status data to the CPU 111.

The imaging controller 105 instructs the imaging elements 103a and 103b to output the image data at the time when a shutter button of the operation unit 115 is pressed. In some cases, the image capturing apparatus 10 displays a preview image on a display (e.g., a display of an external terminal such as a smartphone that performs short-range communication with the image capturing apparatus 10 through the short-range communication circuit 117) or displays a moving image (movie). In case of displaying a moving image, the image data is continuously output from the imaging elements 103a and 103b at a predetermined frame rate (expressed in frames per second).

As described below, the imaging controller 105 operates in cooperation with the CPU 111 to synchronize the time when the imaging element 103a outputs image data and the time when the imaging element 103b outputs the image data. In the present embodiment, the image capturing apparatus 10 does not include a display unit (display). However, in some embodiments, the image capturing apparatus 10 may include a display. The microphone 108 converts sound to audio data (signal). The audio processor 109 acquires the audio data output from the microphone 108 via an I/F bus and performs predetermined processing on the audio data.

The CPU 111 controls entire operation of the image capturing apparatus 10 and performs predetermined processing. The ROM 112 stores various programs for execution by the CPU 111. The SRAM 113 and the DRAM 114 each operate as a work memory and store programs to be executed by the CPU 111 or data being currently processed. More specifically, in one example, the DRAM 114 stores image data currently processed by the image processor 104 and data of the equirectangular projection image on which processing has been performed.

The operation unit 115 collectively refers to, for example, various operation keys, a power switch, the shutter button, and a touch panel having both a display function and an operation function. The user operates the operation unit 115 to input various image capturing (photographing) modes or image capturing (photographing) conditions.

The input/output I/F 116 collectively refers to an interface circuit that allows the image capturing apparatus 10 to communicate data with an external medium such as a Secure Digital (SD) card or an external personal computer. Examples of the interface circuit include an SD card I/F and a Universal Serial Bus (USB) I/F. The input/output I/F 116 may be either wired or wireless. The data of the equirectangular projection image, which is stored in the DRAM 114, is stored in the external medium via the input/output I/F 116 or transmitted to an external terminal (apparatus) via the input/output I/F 116, as desired.

The short-range communication circuit 117 communicates with an external terminal (apparatus) via the antenna 117a of the image capturing apparatus 10 by using short-range wireless communication technology such as near field communication (NFC), Bluetooth®, or Wi-Fi®. In one embodiment, the short-range communication circuit 117 transmits the data of the equirectangular projection image to the external terminal (apparatus).

The electronic compass 118 calculates an orientation of the image capturing apparatus 10 from the Earth's magnetism and outputs orientation information. The orientation information is an example of related information, which is metadata described in compliance with Exif. This information is used for image processing such as image correction of captured images. The related information also includes a date and time when the image is captured by the image capturing apparatus 10, and a data size of the image data. The gyro sensor 119 detects a change in angle (roll, pitch, yaw) with movement of the image capturing apparatus 10. The change in angle is one example of related information (metadata) described in compliance with Exif. This information is used for image processing such as image correction of a captured image. The acceleration sensor 120 detects acceleration in three axial directions. The image capturing apparatus 10 calculates the position thereof (the tilt of the image capturing apparatus 10 with respect to the direction of gravity), based on the acceleration detected by the acceleration sensor 120. With the gyro sensor 119 and the acceleration sensor 120, the image capturing apparatus 10 corrects the tilt of images with high accuracy. The network I/F 121 is an interface for performing data communication using the communication network 100, such as the Internet, via a router or the like.

Hardware Configuration of Server

Referring to FIG. 12, a hardware configuration of the server 50 is described. FIG. 12 is a block diagram illustrating an example hardware configuration of the server 50. Each hardware element of the server 50 is denoted by a reference numeral in 500 series. The server 50 is implemented by a computer. As illustrated in FIG. 12, the server 50 includes a CPU 501, a ROM 502, a RAM 503, a hard disk (HD) 504, a hard disk drive (HDD) controller 505, a display 506, an external device connection I/F 508, a network I/F 509, a bus line 510, a keyboard 511, a pointing device 512, a digital versatile disc rewritable (DVD-RW) drive 514, and a medium I/F 516.

The CPU 501 controls entire operation of the server 50. The ROM 502 stores programs such as an initial program loader (IPL) used for booting the CPU 501. The RAM 503 is used as a work area for the CPU 501. The HD 504 stores various types of data such as programs. The HDD controller 505 controls reading or writing of various types of data from or to the HD 504 under control of the CPU 501. The display 506 displays various types of information such as a cursor, a menu, a window, text, or an image. In one example, the display 506 is a touch panel display provided with an input means. The external device connection I/F 508 is an interface for connecting the server 50 to various external devices. Examples of the external devices include, but are not limited to, a USB memory. The network I/F 509 is an interface for performing data communication using the communication network 100. The bus line 510 is an address bus, a data bus, or the like for electrically connecting the components illustrated in FIG. 12, such as the CPU 501, to each other.

The keyboard 511 is an example of an input means including a plurality of keys for inputting, for example, characters, numerical values, and various instructions. The pointing device 512 is an example of an input means that allows a user to select or execute various instructions, select a target for processing, or move a cursor being displayed. The input means is not limited to the keyboard 511 and the pointing device 512, and may be a touch panel, a voice input device, or the like. The DVD-RW drive 514 controls reading or writing of various types of data from or to a DVD-RW 513, which is an example of a removable recording medium. The removable recording medium is not limited to a DVD-RW, and may be a digital versatile disc-recordable (DVD-R), a Blu-ray Disc®, or the like. The medium I/F 516 controls reading or writing (storing) of data from or to a recording medium 515 such as a flash memory.

Hardware Configuration of Communication Terminal

FIG. 12 is a block diagram illustrating an example hardware configuration of the communication terminal 90. Each hardware element of the communication terminal 90 is denoted by a reference numeral in 900 series in parentheses. The communication terminal 90 is implemented by a computer. As illustrated in FIG. 12, the communication terminal 90 has a configuration similar to that of the server 50, and thus the description of each hardware element of the communication terminal 90 is omitted. The communication terminal 90 includes a short-range communication circuit 917 and an antenna 917a of the short-range communication circuit 917 in addition to a configuration similar to that of the server 50. The short-range communication circuit 917 is a communication circuit in compliance with a communication standard such as NFC, Bluetooth®, or Wi-Fi®.

Each of the programs described above may be recorded as a file in an installable or executable format on a computer-readable recording medium for distribution. Examples of the recording medium include a compact disc recordable (CD-R), a digital versatile disc (DVD), a Blu-ray Disc®, an SD card, and a USB memory. Such recording media may be provided in the domestic or global markets as program products. For example, the server 50 executes a program according to an embodiment of the present disclosure to implement an image processing method according to an embodiment of the present disclosure.

Functional Configuration

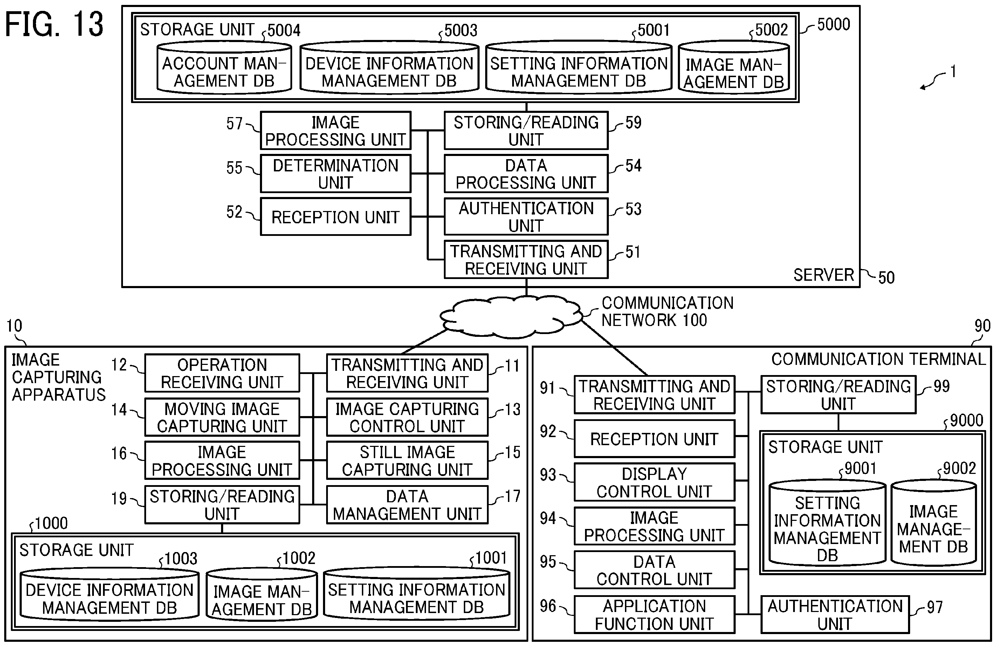

Referring to FIG. 13, a functional configuration of an image processing system according to an embodiment is described. FIG. 13 is a diagram illustrating an example functional configuration of the image processing system 1. FIG. 13 illustrates components related to processing or operation described below among the components of the apparatus, device, and terminal illustrated in FIG. 1.

Functional Configuration of Image Capturing Apparatus

Referring to FIG. 13, a functional configuration of the image capturing apparatus 10 is described. The image capturing apparatus 10 includes a transmitting and receiving unit 11, an operation receiving unit 12, an image capturing control unit 13, a moving image capturing unit 14, a still image capturing unit 15, an image processing unit 16, a data management unit 17, and a storing/reading unit 19. These units are each a function or means implemented by one or more of the components illustrated in FIG. 11 operating in accordance with instructions from the CPU 111 according to an image capturing apparatus program loaded onto the DRAM 114 from the SRAM 113. The image capturing apparatus 10 further includes a storage unit 1000, which is implemented by the ROM 112, the SRAM 113, and the DRAM 114 illustrated in FIG. 11. The storage unit 1000 stores a globally unique identifier (GUID) identifying the image capturing apparatus 10.

The transmitting and receiving unit 11 is an example of a transmitting means and a receiving means. The transmitting and receiving unit 11 is implemented by operation of the CPU 111, and communicates various types of data or information to and from another apparatus or terminal. The transmitting and receiving unit 11 performs data communication with another apparatus or terminal via the network I/F 121 over the communication network 100.

The operation receiving unit 12 is implemented by operation of the operation unit 115 under control of the CPU 111, and receives various selections or inputs performed by a user who is a photographer.

The image capturing control unit 13 is implemented by operation of the imaging unit 101, the image processor 104, and the imaging controller 105 under control of the CPU 111, and captures an image of a subject such as surroundings (e.g., scenery) to obtain captured image data. For example, the image capturing control unit 13 performs image capturing by switching between moving image capturing by the moving image capturing unit 14 and still image capturing by the still image capturing unit 15 in a time-division manner.

The moving image capturing unit 14 is implemented by operation of the imaging unit 101, the image processor 104, and the imaging controller 105 under control of the CPU 111, and performs moving image capturing by the image capturing apparatus 10. For example, the moving image capturing unit 14 captures a moving image while moving in a structure such as a real estate property, which is a predetermined site, or in a space in which the structure is located. The moving image capturing unit 14 captures a moving image in low-resolution continuous frames while the photographer holding the image capturing apparatus 10 is moving, and stores the captured image data in the storage unit 1000. For example, the moving image capturing unit 14 captures a moving image when the photographer holding the image capturing apparatus 10 is moving from a first point to a second point in a real estate property, which is a predetermined site.

The still image capturing unit 15 is implemented by operation of the imaging unit 101, and performs still image capturing by the image capturing apparatus 10 capturing an image of a subject such as surroundings (e.g., scenery). For example, the still image capturing unit 15 captures a plurality of still images each of which is captured at different image capturing positions in a structure such as a real estate property, which is a predetermined site, or in a space in which the structure is located. For example, the still image capturing unit 15 captures a still image (photograph) with a resolution greater than that of the moving image captured by the moving image capturing unit 14, and stores the captured image data in the storage unit 1000. The still image captured by the still image capturing unit 15 may be an image of one frame, or may be a high dynamic range (HDR) image obtained by combining a plurality of images. The moving image capturing is performed when the image capturing apparatus 10 is moving within the predetermined site, and the still image capturing is performed when the image capturing apparatus 10 is stationary in the predetermined site.

The moving image capturing and the still image capturing have different desired image capturing specifications depending on their respective image capturing purposes. In a case of the moving image capturing, continuous images (continuous frames) at a high frame rate are obtained to be used to determine a position. However, the captured images may be low-resolution grayscale images, rather than high-resolution color-layer images. In a case of the still image capturing, continuous frames are not obtained. However, a high-resolution and high-dynamic-range image with color information (RGB) is captured. The still image captured by the still image capturing unit 15 preferably has a high resolution equal to or greater than the 4K resolution, for example, for the purpose of obtaining an image for viewing. On the other hand, the moving image captured by the moving image capturing unit 14 is an image used for determining a position, and, because it is sufficient that a subject captured in the moving image is identifiable, the moving image is an image having a resolution less than that of a still image. The moving image may have a resolution of, for example, about 480p or less. The image capturing apparatus 10 can reduce the total data size in capturing an image for a tour by capturing a low-resolution moving image.

The image processing unit 16 is implemented by operation of the CPU 111, and performs various types of image processing on the still image captured by the still image capturing unit 15 or the moving image captured by the moving image capturing unit 14.

The data management unit 17 is an example of a determination means. The data management unit 17 is implemented by operation in the CPU 111, and performs processing for managing various types of device information.

The storing/reading unit 19 is an example of a setting means. The storing/reading unit 19 is implemented by operation of the CPU 111, and stores various types of data (or information) in the storage unit 1000 or reads various types of data (or information) from the storage unit 1000. The storage unit 1000 also stores image data captured by the moving image capturing unit 14 and the still image capturing unit 15. The image data stored in the storage unit 1000 is associated with image capturing times of the captured images as metadata.

The storage unit 1000 includes a setting information management database (DB) 1001, an image management DB 1002, and a device information management DB 1003. The setting information management DB 1001 includes a setting information management table described below, and stores, for example, setting information for image processing to be performed on a still image or a moving image by the image processing unit 16.

The image management DB 1002 stores images captured by the image capturing apparatus 10 and processed images obtained by the image processing unit 16 performing image processing on the captured images. Each of the captured images and a corresponding one of the processed images are stored in association with an image ID. The captured images and the processed images may be stored in a storage medium such as an SD memory card, which is the external medium described above.

The device information management DB 1003 stores various types of device information.

Functional Configuration of Server

Referring to FIG. 13, a functional configuration of the server 50 is described. The server 50 includes a transmitting and receiving unit 51, a reception unit 52, an authentication unit 53, a data processing unit 54, a determination unit 55, an image processing unit 57, and a storing/reading unit 59. These units are each a function or means implemented by one or more of the components illustrated in FIG. 12 operating in accordance with instructions from the CPU 501 according to a server program loaded onto the RAM 503 from the HD 504. The server 50 further includes a storage unit 5000, which is implemented by the ROM 502, the RAM 503, and the HD 504 illustrated in FIG. 12.

The transmitting and receiving unit 51 is an example of a transmitting means and a receiving means. The transmitting and receiving unit 51 is implemented by operation of the network I/F 509 under control of the CPU 501, and transmits and receives various types of data or information to and from another apparatus or terminal over the communication network 100. For example, the transmitting and receiving unit 51 receives (obtains) a moving image captured by the image capturing apparatus 10 from the image capturing apparatus 10 or the communication terminal 90. Further, for example, the transmitting and receiving unit 51 receives (obtains) a still image captured by the image capturing apparatus 10 from the image capturing apparatus 10 or the communication terminal 90.

The reception unit 52 is implemented by operation of the keyboard 511 or the pointing device 512 under control of the CPU 501, and receives various selections or inputs from the user.

The authentication unit 53 is implemented by operation of the CPU 501, and performs various types of authentication.

The data processing unit 54 is implemented by operation of the CPU 501, and performs data processing on various types of device information.

The determination unit 55 is implemented by operation of the CPU 501, and performs various types of determination processing.

The image processing unit 57 is implemented by operation of the CPU 501, and performs various types of image processing on a still image or a moving image.

The storing/reading unit 59 is an example of a setting means. The storing/reading unit 59 is implemented by operation of the CPU 501, and stores various types of data (or information) in the storage unit 5000 or reads various types of data (or information) from the storage unit 5000.

The storage unit 5000 includes a setting information management DB 5001, an image management DB 5002, a device information management DB 5003, and an account management DB 5004. The setting information management DB 5001 includes a setting information management table described below, and stores, for example, setting information for image processing to be performed on a still image or a moving image by the image processing unit 57.

The image management DB 5002 stores processed images subjected to image processing by the image capturing apparatus 10 or the communication terminal 90 and received from the image capturing apparatus 10 or the communication terminal 90, and processed images obtained by the image processing unit 57 performing image processing on the received processed images. Each of the received processed images and a corresponding one of the obtained processed images are stored in association with an image ID.

The processed images obtained by the image processing unit 57 performing image processing may be transmitted to the image capturing apparatus 10 or the communication terminal 90 and stored in the image management DB 1002 of the image capturing apparatus 10 or an image management DB 9002 of the communication terminal 90, described below. Alternatively, the processed images may be stored in a storage medium such as an SD memory card.

The device information management DB 5003 stores various types of device information. The device information is an example of other information different from an image. The account management DB 5004 stores, for example, account information such as a user ID, and management information for managing the image capturing apparatus 10.

Functional Configuration of Communication Terminal

Referring to FIG. 13, a functional configuration of the communication terminal 90 is described. The communication terminal 90 includes a transmitting and receiving unit 91, a reception unit 92, a display control unit 93, an image processing unit 94, a data control unit 95, an application function unit 96, an authentication unit 97, and a storing/reading unit 99. These units are each a function or means implemented by one or more of the components illustrated in FIG. 12 operating in accordance with instructions from the CPU 901 according to a communication terminal program loaded onto the RAM 903 from the HD 904. The communication terminal 90 further includes a storage unit 9000, which is implemented by the ROM 902, the RAM 903, and the HD 904 illustrated in FIG. 12. The storage unit 9000 stores various applications.

The transmitting and receiving unit 91 is an example of a transmitting means and a receiving means. The transmitting and receiving unit 91 is implemented by operation of the network I/F 909 under control of the CPU 901, and transmits and receives various types of data or information to and from another apparatus or terminal over the communication network 100.

The reception unit 92 is an example of the setting means. The reception unit 92 is implemented by operation of the keyboard 911 or the pointing device 912 under control of the CPU 901, and receives various selections or inputs from the user.

The display control unit 93 is implemented by operation of the CPU 901, and controls the display 906 to display, for example, various images or texts. The display control unit 93 accesses the server 50 using, for example, a web browser or a dedicated application, and controls the display 906 to display an image corresponding to data distributed from the server 50.

The image processing unit 94 is implemented by operation of the CPU 901, and performs various types of image processing on a still image or a moving image.

The data control unit 95 is implemented by operation of the CPU 901, and controls various types of data.

The application function unit 96 is implemented by operation of the CPU 901, and executes functions of various applications stored in the storage unit 9000.

Specifically, the application function unit 96 executes a function of a transmission/reception application for mediating the transmission and reception of information between the image capturing apparatus 10 and the server 50 to control data and information that can be communicated between the image capturing apparatus 10, the communication terminal 90, and the server 50 in cooperation with, for example, the transmitting and receiving unit 91, the data control unit 95, the transmitting and receiving unit 11 and the data management unit 17 of the image capturing apparatus 10, and the transmitting and receiving unit 51 and the data processing unit 54 of the server 50.

The authentication unit 97 is implemented by operation of the CPU 901, and performs various types of authentication.

The storing/reading unit 99 is implemented by operation of the CPU 901, and stores various types of data (or information) in the storage unit 9000 or reads various types of data (or information) from the storage unit 9000.

The storage unit 9000 includes a setting information management DB 9001 and the image management DB 9002. The setting information management DB 9001 includes a setting information management table described below, and stores, for example, setting information for image processing to be performed on a still image or a moving image by the image processing unit 94.

The image management DB 9002 stores images captured by the image capturing apparatus 10 and receives from the image capturing apparatus 10, and processed images obtained by the image processing unit 94 performing image processing on the captured images. Each of the captured images and a corresponding one of the processed images are stored and managed in association with an image ID. The captured images and the processed images may be stored in a storage medium such as an SD memory card, which is an external medium.

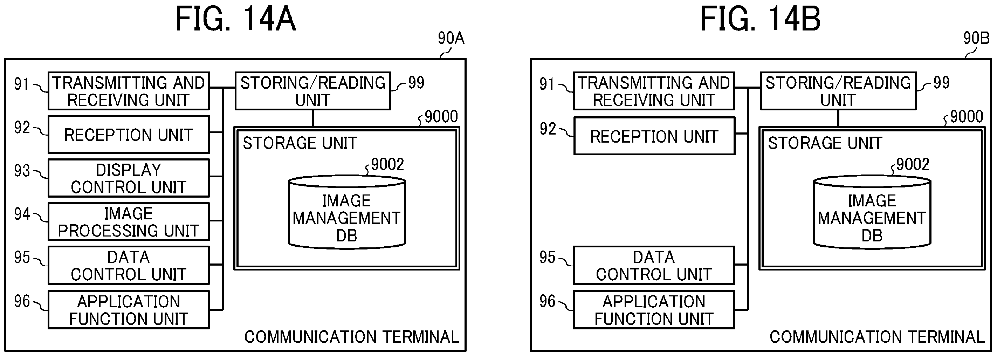

FIGs. 14A and 14B are diagrams illustrating other example functional configurations of the communication terminal 90.

A communication terminal 90A illustrated in FIG. 14A includes the transmitting and receiving unit 91, the reception unit 92, the display control unit 93, the data control unit 95, the application function unit 96, and the storing/reading unit 99, as in the communication terminal 90 illustrated in FIG. 13, but does not include the image processing unit 94 and the authentication unit 97. The storage unit 9000 includes the image management DB 9002, but does not include the setting information management DB 9001.

A communication terminal 90B illustrated in FIG. 14B includes the transmitting and receiving unit 91, the reception unit 92, the data control unit 95, the application function unit 96, and the storing/reading unit 99, as in the communication terminal 90 illustrated in FIG. 13, but does not include the display control unit 93, the image processing unit 94, and the authentication unit 97. The storage unit 9000 includes the image management DB 9002, but does not include the setting information management DB 9001.

The communication terminal 90A and 90B are examples of a communication terminal provided with a third-party developed transmission/reception application.

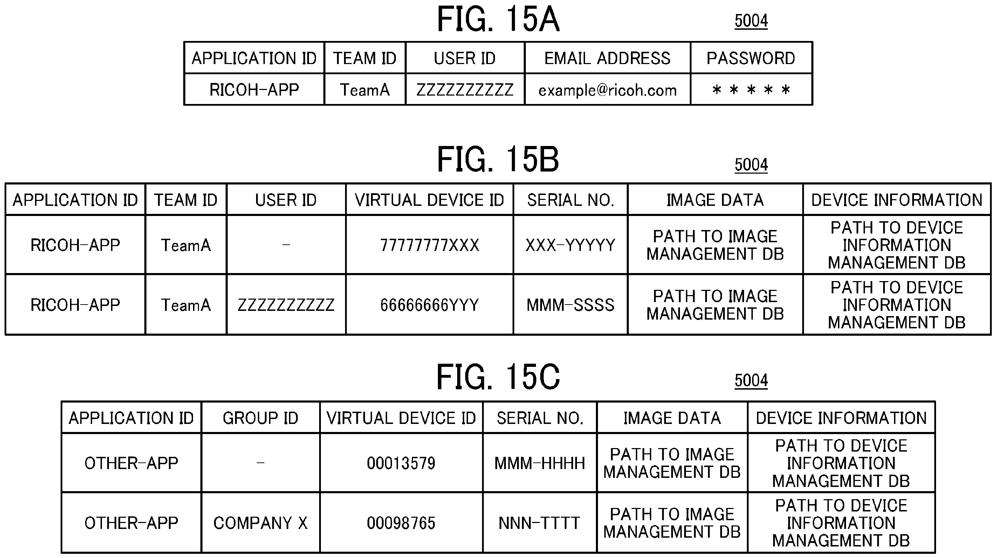

FIGs. 15A to 15C are illustrations of examples of an account management table according to the present embodiment.

FIGs. 15A to 15C illustrate account management tables in the account management DB 5004 included in the storage unit 5000 of the server 50 illustrated in FIG. 13.

The account management table in the account management DB 5004 illustrated in FIG. 15A stores a team ID identifying a team that uses an application, a user ID identifying a user who belongs to the team, and an email address and a password of the user in association with an application ID of the application.

The application ID is information identifying a type of a transmission/reception application stored in the storage unit 9000 of the communication terminal 90.

The application function unit 96 of the communication terminal 90 executes a function of a transmission/reception application for mediating the transmission and reception of information between the image capturing apparatus 10 and the server 50 to control data and information that can be communicated between the image capturing apparatus 10, the communication terminal 90, and the server 50. That is, communicable data and information are determined in accordance with the type of the transmission/reception application.

The application ID "RICOH-APP" is an example of an ID of an in-house developed application, and, as described below, the number of types of information that can be transmitted and received between the server 50 and the image capturing apparatus 10 in an in-house system is large.

The account management table in the account management DB 5004 illustrated in FIG. 15B stores a virtual device ID identifying the image capturing apparatus 10, a serial number of the image capturing apparatus 10, image data (a path to the image management DB 5002), and device information (a path to the device information management DB 5003) in association with an application ID, a team ID, and a user ID.

The account management table in the account management DB 5004 illustrated in FIG. 15C stores a virtual device ID, a serial number of the image capturing apparatus 10, image data, and device information in association with an application ID and a group ID identifying a group that uses an application identified by the application ID.

The application ID "OTHER-APP" is an example of an ID of a third-party developed application, and does not completely support the in-house system. As described below, the number of types of information that can be transmitted and received between the server 50 and the image capturing apparatus 10 in the in-house system is small.

An account management table in the account management DB 5004 may store management information for the communication terminal 90, 90A, or 90B to manage the image capturing apparatus 10 and image identification information, in addition to the information illustrated in FIGs. 15A to 15C. The image identification information is an example of other information different from an image or second other information different from the other information, and the management information is an example of the second other information.

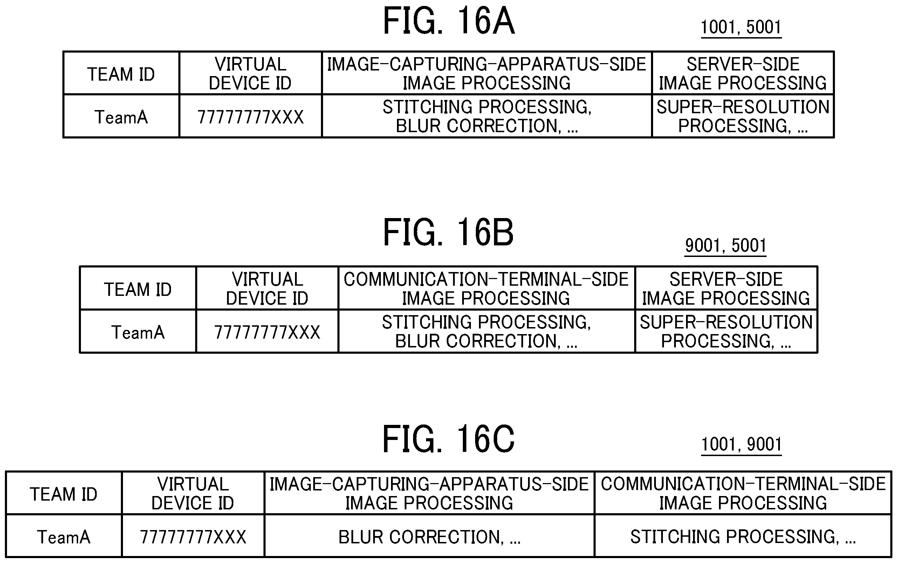

FIGs. 16A to 16C are illustrations of examples of a setting information management table.

FIG. 16A illustrates a setting information management table in the setting information management DB 1001 stored in the storage unit 1000 of the image capturing apparatus 10 and the setting information management DB 5001 stored in the storage unit 5000 of the server 50 illustrated in FIG. 13.

In the setting information management table in the setting information management DB 1001 and the setting information management DB 5001, image-processing setting information including image-capturing-apparatus-side image processing information and server-side image processing information is managed in association with a team ID and a virtual device ID.

The image-capturing-apparatus-side image processing information is an example of first processing information indicating first image processing to be performed by the image capturing apparatus 10 serving as a transmission source apparatus. The server-side image processing information is an example of second processing information indicating second image processing to be performed by the server 50 serving as a transmission destination apparatus. In one embodiment, the first image processing to be performed by the image capturing apparatus 10 is image processing with a relatively small load, and the second image processing to be performed by the server 50 is image processing with a relatively large load.

The present embodiment is applied to the first image processing and the second image processing as long as the first image processing and the second image processing are processing to be performed on images. Examples of such processing include stitching processing described below for stitching images obtained by the imaging elements 103a and 103b together to generate a spherical image, and zenith correction for adjusting an image such that the top and bottom of the image are oriented vertically upward and downward, respectively.

Examples of the processing further include blur correction for correcting a blurry image caused by, for example, slight movements as the user's hand moves, and super-resolution processing for improving the resolution of an image. Examples of the processing further include flare correction for correcting flare caused by a reflection of intense light from a lens or the like to make a part or whole of the image white, object detection processing for detecting a specific object such as a face of a person, a person, or a marker for detecting an object, and denoising processing for removing or reducing noise generated in an image.

There are various other types of image processing. In the present embodiment, in one example, image processing to be performed only by the image capturing apparatus 10 and image processing, examples of which have been described above, may be present. Examples of the image processing to be performed only by the image capturing apparatus 10 include shading correction and color correction, which are processed by the ISP of the image capturing apparatus 10. An image captured by the image capturing apparatus 10 is subjected to image compression by the image capturing apparatus 10 before being transmitted to the server 50. Thus, image processing to be performed before the image compression is performed corresponds to the image processing to be performed only by the image capturing apparatus 10. In other words, image processing that can be performed after the image compression is performed may be defined as first image processing or second image processing.

In the present embodiment, the term "image processing" is broadly divided into two operations: image-capturing-apparatus-unique image processing to be performed only by the image capturing apparatus 10; and first image processing and second image processing to be performed by the image capturing apparatus 10 or the server 50. Image processing to be performed by the image capturing apparatus 10 and the server 50 in a shared manner, which is described later, is described as the first image processing and the second image processing.

FIG. 16B illustrates a setting information management table in the setting information management DB 9001 stored in the storage unit 9000 of the communication terminal 90 and the setting information management DB 5001 stored in the storage unit 5000 of the server 50 illustrated in FIG. 13.

In the setting information management table in the setting information management DB 9001 and the setting information management DB 5001, image-processing setting information including communication-terminal-side image processing information and server-side image processing information is managed in association with a team ID and a virtual device ID.

The communication-terminal-side image processing information is an example of first processing information indicating first image processing to be performed by the communication terminal 90 serving as a transmission source apparatus. The server-side image processing information is an example of second processing information indicating second image processing to be performed by the server 50 serving as a transmission destination apparatus. In one embodiment, the first image processing to be performed by the communication terminal 90 is image processing with a relatively small load, and the second image processing to be performed by the server 50 is image processing with a relatively large load.

FIG. 16C illustrates a setting information management table in the setting information management DB 1001 stored in the storage unit 1000 of the image capturing apparatus 10 and the setting information management DB 9001 stored in the storage unit 9000 of the communication terminal 90 illustrated in FIG. 13.

In the setting information management table in the setting information management DB 1001 and the setting information management DB 9001, image-processing setting information including image-capturing-apparatus-side image processing information and communication-terminal-side image processing information are stored in association with a team ID and a virtual device ID.

The image-capturing-apparatus-side image processing information is an example of first processing information indicating first image processing to be performed by the image capturing apparatus 10. The communication-terminal-side image processing information is an example of second processing information indicating second image processing to be performed by the communication terminal 90. In one embodiment, the first image processing to be performed by the image capturing apparatus 10 is image processing with a relatively small load, and the second image processing to be performed by the communication terminal 90 is image processing with a relatively large load.

The image-processing setting information in the setting information management table illustrated in FIG. 16A is set for a transmission path for directly transmitting an image from the image capturing apparatus 10 to the server 50.

The image-processing setting information in the setting information management tables illustrated in FIGs. 16B and 16C are set for a transmission path for transmitting an image from the image capturing apparatus 10 to the server 50 via the communication terminal 90. In this case, the image-processing setting information may include all of the image-capturing-apparatus-side image processing information, the communication-terminal-side image processing information, and the server-side image processing information.

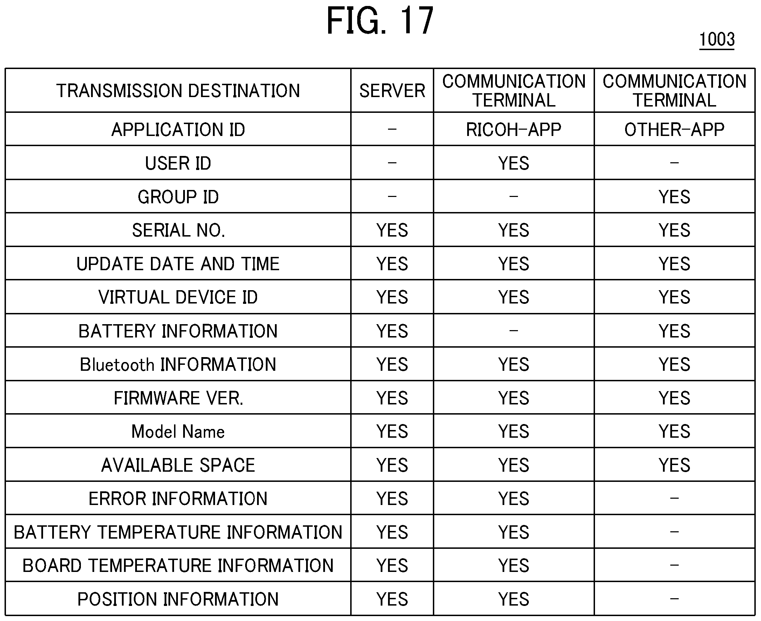

FIG. 17 is an illustration of an example of a device information management table. FIG. 17 illustrates a device information management table in the device information management DB 1003 stored in the storage unit 1000 of the image capturing apparatus 10 illustrated in FIG. 13.

In the device information management table in the device information management DB 1003 illustrated in FIG. 17, types of device information that are transmittable are stored for the case where the transmission destination is the server 50 ("SERVER") and the case where the transmission destination is the communication terminal 90 ("COMMUNICATION TERMINAL") . In a case where the transmission destination is the communication terminal 90, types of device information that are transmittable are stored in association with the application IDs illustrated in FIGs. 15A to 15C. Specifically, in FIG. 17, the device information that is transmittable is indicated by "YES".

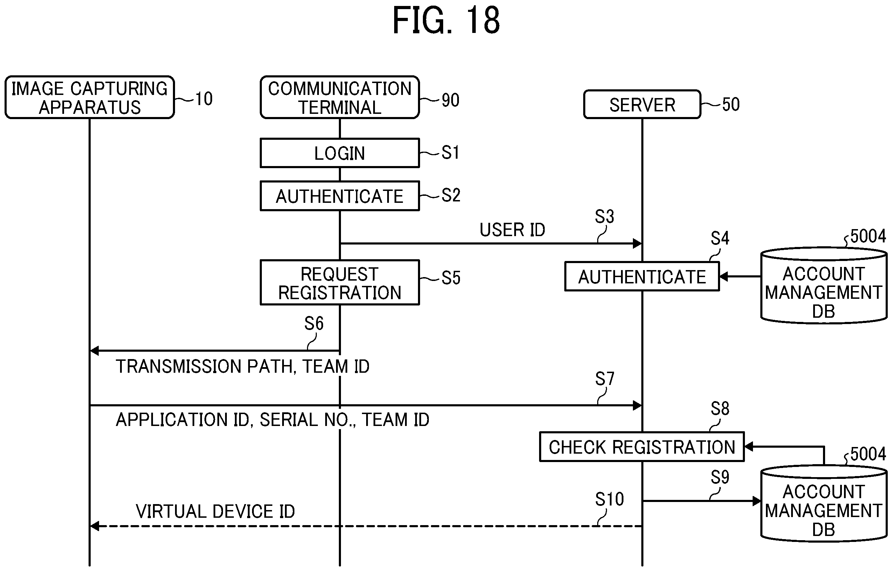

FIG. 18 is a sequence diagram illustrating an example of a registration process in a case of server direct transmission, in which data is transmitted directly to the server.

In response to a user inputting a user ID and a password, the reception unit 92 of the communication terminal 90 receives the input information, which is the user ID and the password (step S1). The authentication unit 97 authenticates the user based on the input information received by the reception unit 92 (step S2).

The transmitting and receiving unit 91 transmits the user ID of the user authenticated in step S2 to the server 50. The transmitting and receiving unit 51 of the server 50 receives the user ID transmitted from the communication terminal 90 (step S3).

The authentication unit 53 refers to the account management DB 5004 (for example, the table of FIG. 15A) managed by the storing/reading unit 59, and authenticates the user based on the user ID received in step S3 (step S4). The transmitting and receiving unit 91 transmits a result of the authentication to the communication terminal 90.

The following example assumes that the user has been authenticated.

In response to the user inputting information for requesting registration of a transmission path for direct transmission from the image capturing apparatus 10 to the server 50, the reception unit 92 of the communication terminal 90 receives information on a registration request. The storing/reading unit 99 reads a team ID stored in the storage unit 9000 in association with the user ID that is input (step S5). The team ID stored in the storage unit 9000 is, for example, a team ID associated with the user ID of the authenticated user.

The transmitting and receiving unit 91 transmits information indicating the transmission path received in step S5 and the team ID read in step S5 to the image capturing apparatus 10. The transmitting and receiving unit 11 of the image capturing apparatus 10 receives the information indicating the transmission path and the team ID, which are transmitted from the communication terminal 90. The data management unit 17 causes the storing/reading unit 19 to store the received information indicating the transmission path in the storage unit 1000 (step S6).

The data management unit 17 causes the storing/reading unit 19 to read the application ID stored in association with the communication terminal 90 and the serial number of the image capturing apparatus 10 from the storage unit 1000. Information such as the application ID and the serial number are previously stored in the storage unit 1000. The transmitting and receiving unit 11 transmits the application ID, the serial number, and the team ID to the server 50. The transmitting and receiving unit 51 of the server 50 receives the application ID, the serial number, and the team ID transmitted from the image capturing apparatus 10 (step S7).

The authentication unit 53 refers to the account management DB 5004 and checks whether the various types of information received in step S7 have been registered. If the various types of information have not been registered, the authentication unit 53 assigns a virtual device ID corresponding to the serial number (step S8). The data processing unit 54 causes the storing/reading unit 59 to store the various types of information received in step S7 and the virtual device ID in the account management DB 5004 in association with each other (step S9). For example, the various types of information received in step S7 are stored in association with the user ID, as illustrated in FIG. 15B.

The transmitting and receiving unit 51 transmits the virtual device ID assigned in step S8 to the image capturing apparatus 10. The transmitting and receiving unit 11 of the image capturing apparatus 10 receives the virtual device ID transmitted from the server 50 (step S10). Accordingly, a transmission path for direct transmission from the image capturing apparatus 10 to the server 50, that is, a second transmission path that does not pass through the communication terminal 90, is registered.

If it is determined in step S8 that the various types of information received in step S7 have been registered, in step S10, the transmitting and receiving unit 51 transmits an error message indicating that the various types of information have been registered to the image capturing apparatus 10. The transmitting and receiving unit 11 of the image capturing apparatus 10 receives the error message transmitted from the server 50.

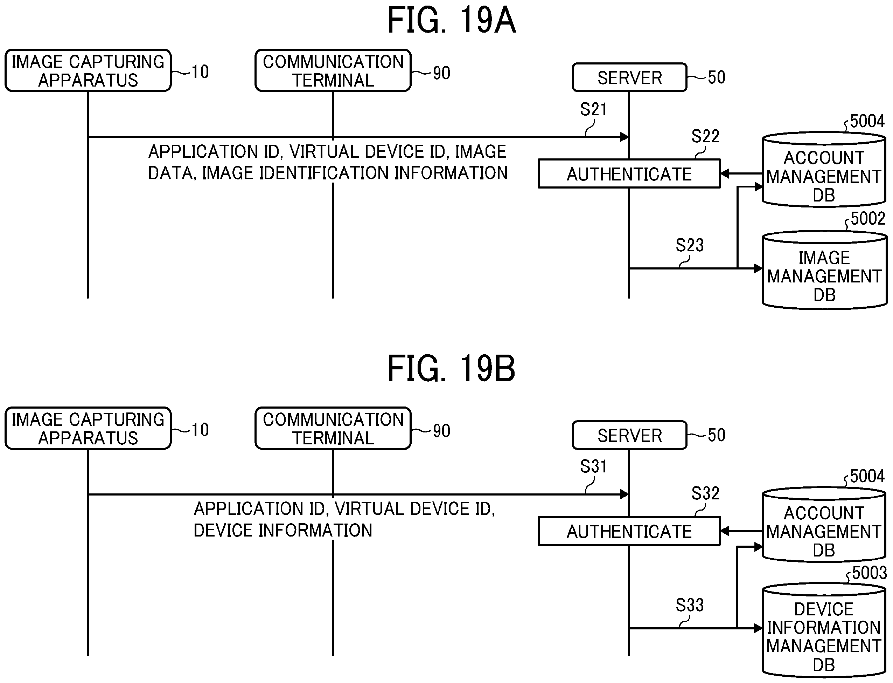

FIG. 19A is a sequence diagram illustrating an example of server direct transmission of an image according to the present embodiment.

The data management unit 17 of the image capturing apparatus 10 causes the storing/reading unit 19 to read an image from the image management DB 1002. The transmitting and receiving unit 11 transmits an application ID, a virtual device ID, image data representing the image, and image identification information for identifying the image (for example, the image ID) to the server 50. The transmitting and receiving unit 51 of the server 50 receives the application ID, the virtual device ID, the image data, and the image identification information transmitted from the image capturing apparatus 10 (step S21).

The authentication unit 53 refers to the account management DB 5004 and authenticates the various types of information received in step S21 (step S22). The data processing unit 54 causes the storing/reading unit 59 to store the image of the image data received in step S21 in the image management DB 5002, and store a path to the image management DB 5002 in the account management DB 5004 (for example, the table of FIG. 15B) in association with the image identification information, the application ID and the virtual device ID received in step S21 (step S23).

In a case where image processing is performed on the image of the image data received in step S21, in step S23, the data processing unit 54 causes the storing/reading unit 59 to store, in the image management DB 5002, a processed image obtained by performing the image processing.

FIG. 19B is a sequence diagram illustrating an example of server direct transmission of device information.

The data management unit 17 of the image capturing apparatus 10 causes the storing/reading unit 19 to refer to the device information management table illustrated in FIG. 17 and read device information receivable by the server 50 from the device information management DB 1003. The transmitting and receiving unit 11 transmits an application ID, a virtual device ID, and the device information read from the storage unit 1000 to the server 50. The transmitting and receiving unit 51 of the server 50 receives the application ID, the virtual device ID, and the device information transmitted from the image capturing apparatus 10 (step S31).

The authentication unit 53 refers to the account management DB 5004 and authenticates the various types of information received in step S31 (step S32). The data processing unit 54 causes the storing/reading unit 59 to store the device information received in step S31 in the device information management DB 5003, and store a path to the device information management DB 5003 in the account management DB 5004 (for example, the table of FIG. 15B) in association with the application ID and the virtual device ID received in step S31 (step S33).

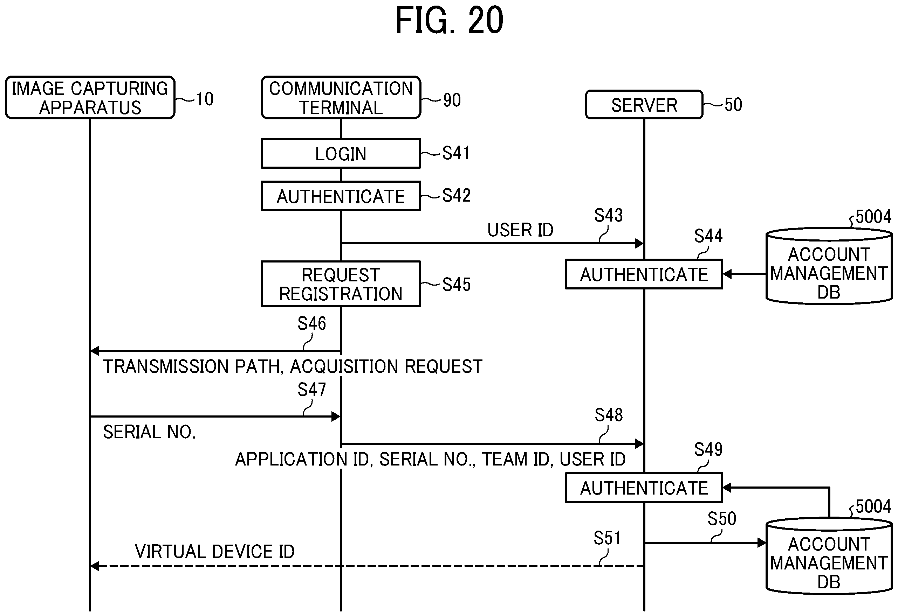

FIG. 20 is a sequence diagram illustrating an example of a registration process of an intermediary of transmission and reception.

In response to a user inputting a user ID and a password, the reception unit 92 of the communication terminal 90 receives the input information, which is the user ID and the password (step S41). The authentication unit 97 authenticates the user based on the input information received by the reception unit 92 (step S42).

The transmitting and receiving unit 91 transmits the user ID of the user authenticated in step S42 to the server 50. The transmitting and receiving unit 51 of the server 50 receives the user ID transmitted from the communication terminal 90 (step S43).

The authentication unit 53 refers to the account management DB 5004 (for example, the table of FIG. 15A) managed by the storing/reading unit 59, and authenticates the user based on the user ID received in step S43 (step S44). The transmitting and receiving unit 91 transmits a result of the authentication to the communication terminal 90.

The following example assumes that the user has been authenticated.

In response to the user inputting information for requesting registration of a transmission path for transmission from the image capturing apparatus 10 to the server 50 via the communication terminal 90, the reception unit 92 of the communication terminal 90 receives information on a registration request. The storing/reading unit 99 reads a team ID stored in the storage unit 9000 in association with the user ID (step S45).

The transmitting and receiving unit 91 transmits information indicating the transmission path received in step S45 and an acquisition request for acquiring the serial number of the image capturing apparatus 10 to the image capturing apparatus 10. The transmitting and receiving unit 11 of the image capturing apparatus 10 receives the information indicating the transmission path and the acquisition request, which are transmitted from the communication terminal 90. The data management unit 17 causes the storing/reading unit 19 to store the received information indicating the transmission path in the storage unit 1000 (step S46).

The data management unit 17 causes the storing/reading unit 19 to read the serial number of the image capturing apparatus 10 from the storage unit 1000. The transmitting and receiving unit 11 transmits the serial number to the communication terminal 90. The transmitting and receiving unit 91 of the communication terminal 90 receives the serial number transmitted from the image capturing apparatus 10 (step S47).

The transmitting and receiving unit 91 transmits an application ID, the serial number received in step S47, the team ID read in step S45, and the user ID to the server 50. The transmitting and receiving unit 51 of the server 50 receives the application ID, the serial number, the team ID, and the user ID transmitted from the communication terminal 90 (step S48).

The authentication unit 53 refers to the account management DB 5004 and checks whether the various types of information received in step S48 have been registered. If the various types of information have not been registered, the authentication unit 53 assigns a virtual device ID corresponding to the serial number (step S49). The data processing unit 54 causes the storing/reading unit 59 to store the various types of information received in step S48 and the virtual device ID in the account management DB 5004 (for example, the table of FIG. 15B) in association with each other (step S50).

The transmitting and receiving unit 51 transmits the virtual device ID assigned in step S49 to the image capturing apparatus 10. The transmitting and receiving unit 11 of the image capturing apparatus 10 receives the virtual device ID transmitted from the server 50 (step S51). Accordingly, a first transmission path for transmission from the image capturing apparatus 10 to the server 50 via the communication terminal 90 is registered.

If it is determined in step S49 that the various types of information received in step S48 have been registered, in step S51, the transmitting and receiving unit 51 transmits an error message indicating that the various types of information have been registered to the image capturing apparatus 10. The transmitting and receiving unit 11 of the image capturing apparatus 10 receives the error message transmitted from the server 50.

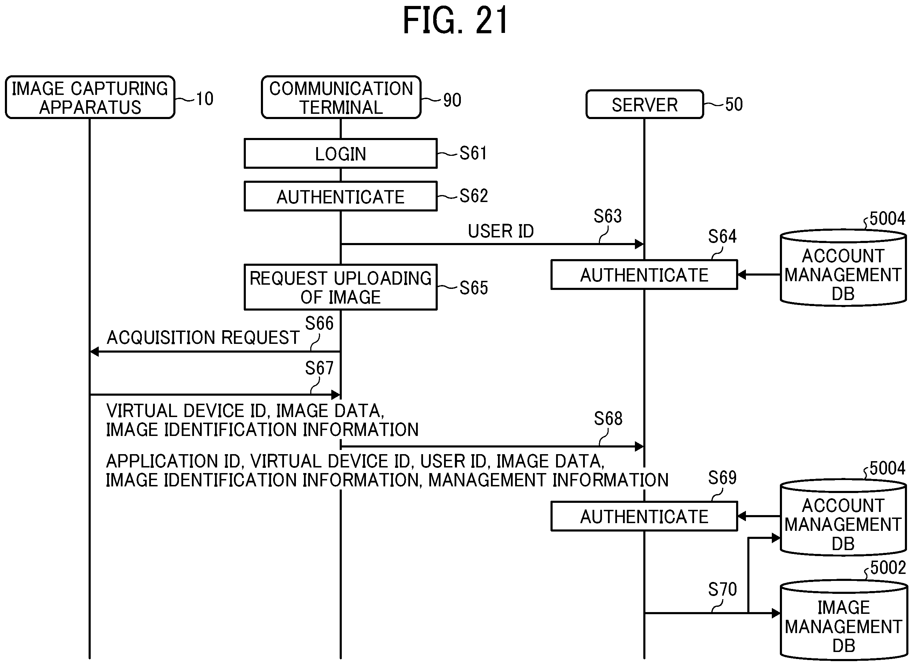

FIG. 21 is a sequence diagram illustrating an example of a process for mediating the transmission and reception of an image.

In response to a user inputting a user ID and a password, the reception unit 92 of the communication terminal 90 receives the input information, which is the user ID and the password (step S61). The authentication unit 97 authenticates the user based on the information received by the reception unit 92 (step S62).

The transmitting and receiving unit 91 transmits the user ID of the user authenticated in step S62 to the server 50. The transmitting and receiving unit 51 of the server 50 receives the user ID transmitted from the communication terminal 90 (step S63).

The authentication unit 53 refers to the account management DB 5004 (for example, the table of FIG. 15A), managed by the storing/reading unit 59, and authenticates the user based on the user ID received in step S63 (step S64). The transmitting and receiving unit 91 transmits a result of the authentication to the communication terminal 90.

The following example assumes that the user has been authenticated.

In response to the user inputting information for requesting uploading of an image, the reception unit 92 of the communication terminal 90 receives information on an upload request (step S65).

The transmitting and receiving unit 91 transmits an acquisition request for acquiring an image to the image capturing apparatus 10. The transmitting and receiving unit 11 of the image capturing apparatus 10 receives the acquisition request transmitted from the communication terminal 90 (step S66).

The data management unit 17 causes the storing/reading unit 19 to read an image from the image management DB 1002. The transmitting and receiving unit 11 transmits a virtual device ID, image data representing the read image, and image identification information for identifying the image (for example, the image ID) to the communication terminal 90. The transmitting and receiving unit 91 of the communication terminal 90 receives the virtual device ID, the image data, and the image identification information (step S67).

The data control unit 95 causes the storing/reading unit 99 to read management information of the image capturing apparatus 10 from the storage unit 9000. The transmitting and receiving unit 91 transmits an application ID, the virtual device ID, the user ID, the image data, the image identification information, and the management information to the server 50. The transmitting and receiving unit 51 of the server 50 receives the application ID, the virtual device ID, the user ID, the image data, the image identification information, and the management information transmitted from the communication terminal 90 (step S68).

The authentication unit 53 refers to the account management DB 5004 and authenticates the various types of information received in step S68 (step S69). The data processing unit 54 causes the storing/reading unit 59 to store the image of the image data received in step S68 in the image management DB 5002, and further a path to the image management DB 5002,in the account management DB 5004 (for example, the table of FIG. 15B) in association with the management information and the image identification information, and the application ID and the virtual device ID received in step S68 (step S70).

In a case where image processing is performed on the image corresponding to the image data received in step S68, in step S70, the data processing unit 54 causes the storing/reading unit 59 to store, in the image management DB 5002, a processed image obtained by performing the image processing.

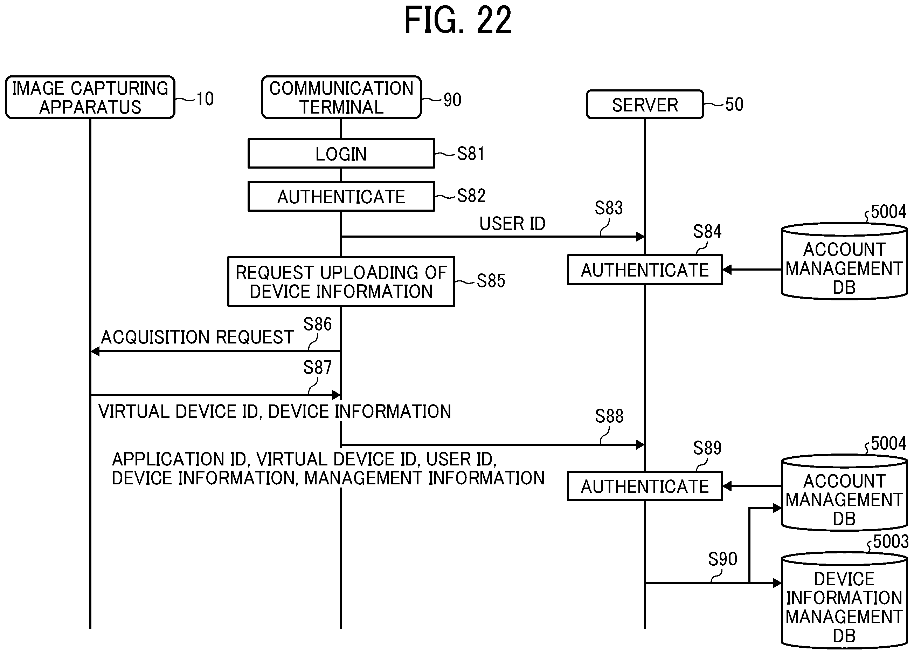

FIG. 22 is a sequence diagram illustrating an example of a process for mediating the transmission and reception of device information.

In response to a user inputting a user ID and a password, the reception unit 92 of the communication terminal 90 receives the input information, which is the user ID and the password (step S81). The authentication unit 97 authenticates the user based on the input information received by the reception unit 92 (step S82).

The transmitting and receiving unit 91 transmits the user ID of the user authenticated in step S82 to the server 50. The transmitting and receiving unit 51 of the server 50 receives the user ID transmitted from the communication terminal 90 (step S83).

The authentication unit 53 refers to the account management DB 5004 (for example, the table of FIG. 15A) managed by the storing/reading unit 59, and authenticates the user based on the user ID received in step S83 (step S84). The transmitting and receiving unit 91 transmits a result of the authentication to the communication terminal 90.

The following example assumes that the user has been authenticated.

In response to the user inputting information for requesting uploading of device information, the reception unit 92 of the communication terminal 90 receives information on an upload request (step S85).

The transmitting and receiving unit 91 transmits an acquisition request for acquiring device information to the image capturing apparatus 10. The transmitting and receiving unit 11 of the image capturing apparatus 10 receives the acquisition request transmitted from the communication terminal 90 (step S86).

The data management unit 17 causes the storing/reading unit 19 to refer to the device information management table illustrated in FIG. 17 and read device information receivable by the communication terminal 90 from the storage unit 1000. The transmitting and receiving unit 11 transmits a virtual device ID and the device information read from the storage unit 1000 to the communication terminal 90. The transmitting and receiving unit 91 of the communication terminal 90 receives the virtual device ID and the device information transmitted from the image capturing apparatus 10 (step S87).

The data control unit 95 causes the storing/reading unit 99 to read management information of the image capturing apparatus 10 from the storage unit 9000. The transmitting and receiving unit 91 transmits an application ID, the virtual device ID, the user ID, the device information, and the management information to the server 50. The transmitting and receiving unit 51 of the server 50 receives the application ID, the virtual device ID, the user ID, the device information, and the management information transmitted from the communication terminal 90 (step S88).

The authentication unit 53 refers to the account management DB 5004 and authenticates the various types of information received in step S88 (step S89). The data processing unit 54 causes the storing/reading unit 59 to store the device information received in step S88 in the device information management DB 5003, and a path to the device information management DB 5003 in the account management DB 5004 (for example, the table of FIG. 15B) in association with the management information, the application ID, and the virtual device ID received in step S88 (step S90).

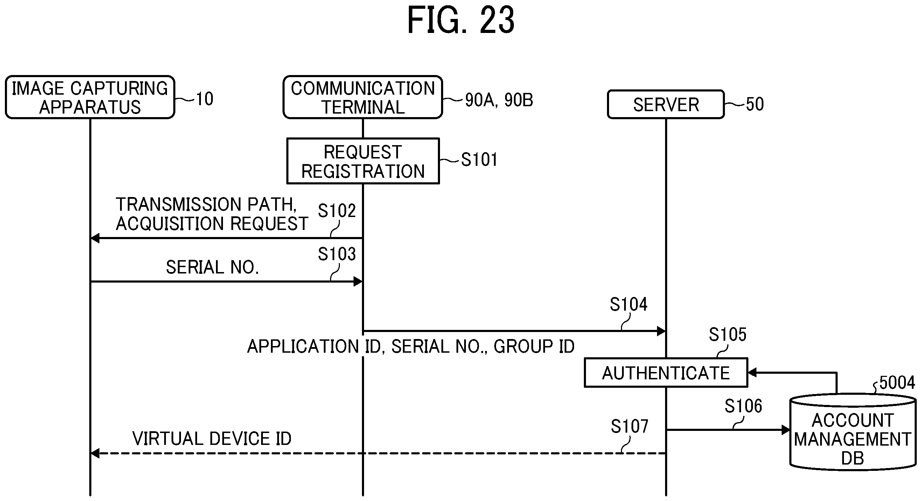

FIG. 23 is a sequence diagram illustrating another example of a registration process of an intermediary of transmission and reception.

In response to a user inputting information on a registration request, which requests registration of a transmission path for transmission from the image capturing apparatus 10 to the server 50 via the communication terminal 90A or 90B, the reception unit 92 of the communication terminal 90A or 90B receives the information on the registration request. The storing/reading unit 99 reads a group ID stored in the storage unit 9000 in association with a user ID of the user (step S101).

The transmitting and receiving unit 91 transmits information indicating the transmission path received in step S101 and an acquisition request for acquiring the serial number of the image capturing apparatus 10 to the image capturing apparatus 10. The transmitting and receiving unit 11 of the image capturing apparatus 10 receives the information indicating the transmission path and the acquisition request, which are transmitted from the communication terminal 90A or 90B. The data management unit 17 causes the storing/reading unit 19 to store the received information indicating the transmission path in the storage unit 1000 (step S102).

The data management unit 17 causes the storing/reading unit 19 to read the serial number of the image capturing apparatus 10 from the storage unit 1000. The transmitting and receiving unit 11 transmits the serial number to the communication terminal 90A or 90B. The transmitting and receiving unit 91 of the communication terminal 90A or 90B receives the serial number transmitted from the image capturing apparatus 10 (step S103).

The transmitting and receiving unit 91 transmits an application ID, the serial number received in step S103, and the group ID to the server 50. The transmitting and receiving unit 51 of the server 50 receives the application ID, the serial number, and the group ID transmitted from the communication terminal 90A or 90B (step S104).

The authentication unit 53 refers to the account management DB 5004 (for example, the table of FIG. 15C) and checks whether the various types of information received in step S104 have been registered. If the various types of information have not been registered, the authentication unit 53 assigns a virtual device ID corresponding to the serial number (step S105). The data processing unit 54 causes the storing/reading unit 59 to store the various types of information received in step S104 and the virtual device ID in the account management DB 5004 in association with each other (step S106).

The transmitting and receiving unit 51 transmits the virtual device ID assigned in step S105 to the image capturing apparatus 10. The transmitting and receiving unit 11 of the image capturing apparatus 10 receives the virtual device ID transmitted from the server 50 (step S107).

If it is determined in step S105 that the various types of information received in step S104 have been registered, in step S107, the transmitting and receiving unit 51 transmits an error message indicating that the various types of information have been registered to the image capturing apparatus 10. The transmitting and receiving unit 11 of the image capturing apparatus 10 receives the error message transmitted from the server 50.

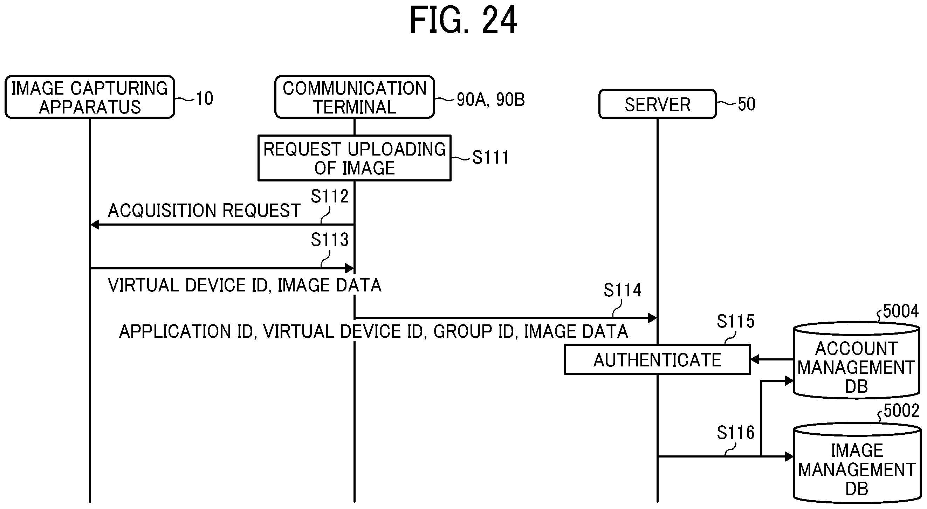

FIG. 24 is a sequence diagram illustrating another example of a process for mediating the transmission and reception of an image according to the present embodiment.

In response to a user inputting information for requesting uploading of an image, the reception unit 92 of communication terminal 90A or 90B receives information on an upload request (step S111).

The transmitting and receiving unit 91 transmits an acquisition request for acquiring an image to the image capturing apparatus 10. The transmitting and receiving unit 11 of the image capturing apparatus 10 receives the acquisition request transmitted from the communication terminal 90A or 90B (step S112).

The data management unit 17 causes the storing/reading unit 19 to read an image from the image management DB 1002. The transmitting and receiving unit 11 transmits a virtual device ID and image data indicating the read image to the communication terminal 90A or 90B. The transmitting and receiving unit 91 of the communication terminal 90A or 90B receives the virtual device ID and the image data (step 5113). The data management unit 17 determines that image identification information is not receivable by the transmission/reception application included in the communication terminal 90A or 90B, and, unlike step S67 in FIG. 21, the transmitting and receiving unit 11 does not transmit the image identification information to the communication terminal 90A or 90B.

The transmitting and receiving unit 91 transmits an application ID, the virtual device ID, a group ID, and the image data to the server 50. The transmitting and receiving unit 51 of the server 50 receives the application ID, the virtual device ID, the group ID, and the image data transmitted from the communication terminal 90A or 90B (step S114). Unlike step S68 in FIG. 21, the data control unit 95 does not cause the transmitting and receiving unit 91 to transmit management information to the server 50, based on the transmission/reception application.

The authentication unit 53 refers to the account management DB 5004 (for example, the table of FIG. 15C) and authenticates the various types of information received in step S114 (step S115). The data processing unit 54 causes the storing/reading unit 59 to store the image corresponding to the image data received in step S114 in the image management DB 5002, and store a path to the image management DB 5002 in the account management DB 5004 in association with the application ID, the group ID, and the virtual device ID received in step S114 (step S116).

In a case where image processing is performed on the image corresponding to the image data received in step S114, in step S116, the data processing unit 54 causes the storing/reading unit 59 to store, in the image management DB 5002, a processed image obtained by performing the image processing.

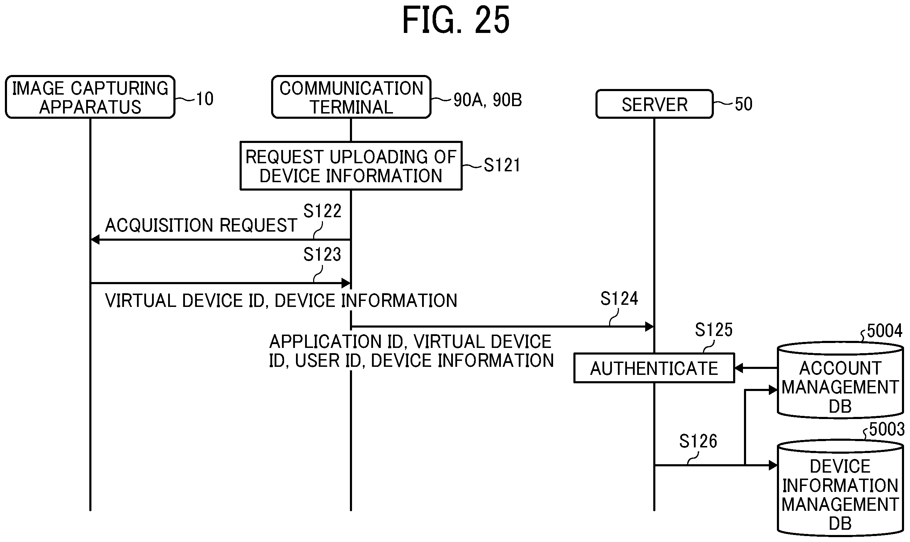

FIG. 25 is a sequence diagram illustrating another example of a process for mediating the transmission and reception of device information according to the present embodiment.

In response to a user inputting information for requesting uploading of device information, the reception unit 92 of the communication terminal 90A or 90B receives information on an upload request (step S121).

The transmitting and receiving unit 91 transmits an acquisition request for acquiring device information to the image capturing apparatus 10. The transmitting and receiving unit 11 of the image capturing apparatus 10 receives the acquisition request transmitted from the communication terminal 90A or 90B (step S122).

The data management unit 17 causes the storing/reading unit 19 to refer to the device information management table illustrated in FIG. 17 and read device information receivable by the communication terminal 90A or 90B from the storage unit 1000. The transmitting and receiving unit 11 transmits a virtual device ID and the device information read from the storage unit 1000 to the communication terminal 90A or 90B. The transmitting and receiving unit 91 of the communication terminal 90A or 90B receives the virtual device ID and the device information transmitted from the image capturing apparatus 10 (step S123).

The transmitting and receiving unit 91 transmits an application ID, the virtual device ID, a user ID, and the device information to the server 50. The transmitting and receiving unit 51 of the server 50 receives the application ID, the virtual device ID, the user ID, and the device information transmitted from the communication terminal 90A or 90B (step S124). Unlike step S88 in FIG. 22, the data control unit 95 does not cause the transmitting and receiving unit 91 to transmit management information to the server 50, based on the transmission/reception application.

The authentication unit 53 refers to the account management DB 5004 and authenticates the various types of information received in step S124 (step S125). The data processing unit 54 causes the storing/reading unit 59 to store the device information received in step S124 in the device information management DB 5003, and store a path to the device information management DB 5003 in the account management DB 5004 in association with the application ID and the virtual device ID received in step S124 (step S126).

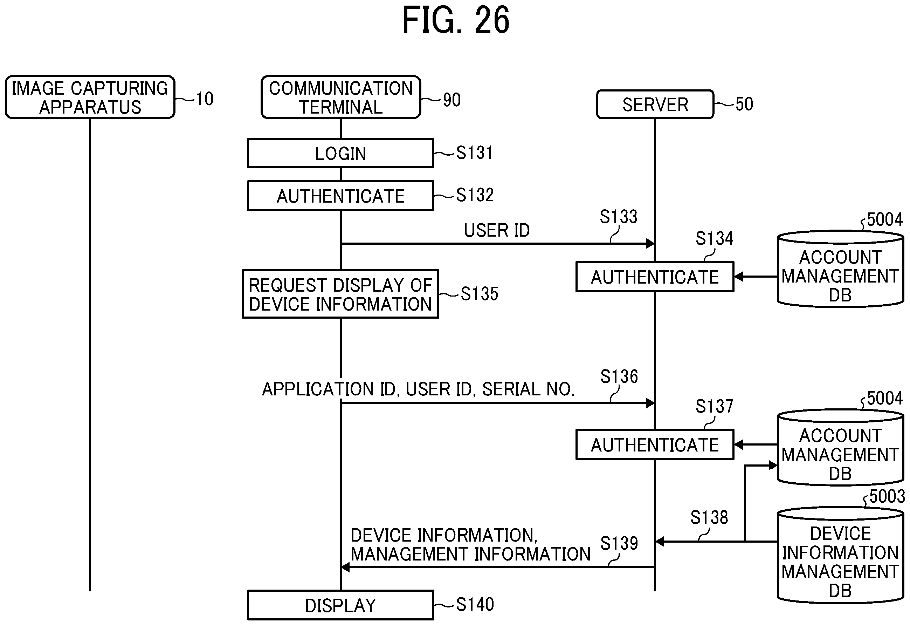

FIG. 26 is a sequence diagram illustrating an example of a process for displaying device information according to the present embodiment.

In response to a user inputting a user ID and a password, the reception unit 92 of the communication terminal 90 receives the input information, which is the user ID and the password (step S131). The authentication unit 97 authenticates the user based on the input information received by the reception unit 92 (step S132).

The transmitting and receiving unit 91 transmits the user ID of the user authenticated in step S132 to the server 50. The transmitting and receiving unit 51 of the server 50 receives the user ID transmitted from the communication terminal 90 (step S133).

The authentication unit 53 refers to the account management DB 5004(for example, the table of FIG. 15A), managed by the storing/reading unit 59, and authenticates the user ID received in step S133 (step S134). The transmitting and receiving unit 91 transmits a result of the authentication to the communication terminal 90.

The following example assumes that the user has been authenticated.

In response to the user inputting information for requesting display of device information of the target image capturing apparatus 10, the reception unit 92 of the communication terminal 90 receives information on a display request (step S135).

The transmitting and receiving unit 91 transmits an application ID, the user ID, and the serial number of the image capturing apparatus 10 on which the device information is to be displayed to the server 50. The transmitting and receiving unit 51 of the server 50 receives the application ID, the user ID, and the serial number transmitted from the communication terminal 90 (step S136).

The authentication unit 53 refers to the account management DB 5004 and authenticates the various types of information received in step S136 (step S137). The data processing unit 54 causes the storing/reading unit 59 to read device information and management information of the image capturing apparatus 10 corresponding to the serial number received in step S136 from the device information management DB 5003 and the account management DB 5004 (step S138).

The transmitting and receiving unit 51 transmits the device information and the management information read in step S138 to the communication terminal 90. The transmitting and receiving unit 91 of the communication terminal 90 receives the device information and the management information transmitted from the server 50 (step S139). The display control unit 93 causes the display 906 to display the device information and the management information received in step S139 (step S140).

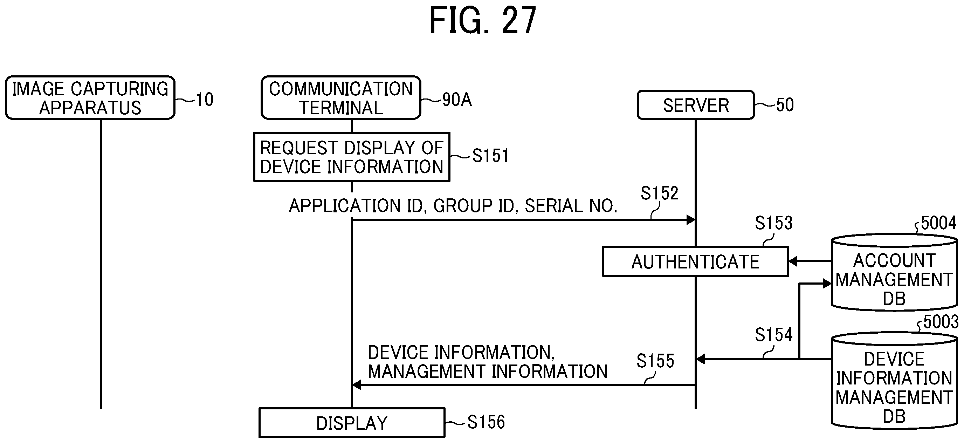

FIG. 27 is a sequence diagram illustrating another example of a process for displaying device information according to the present embodiment.

In response to a user inputting information for requesting display of device information of the target image capturing apparatus 10, the reception unit 92 of the communication terminal 90A receives information on a display request (step S151).

The transmitting and receiving unit 91 transmits an application ID, a group ID, and the serial number of the image capturing apparatus 10 on which the device information is to be displayed to the server 50. The transmitting and receiving unit 51 of the server 50 receives the application ID, the group ID, and the serial number transmitted from the communication terminal 90A (step S152).

The authentication unit 53 refers to the account management DB 5004 and authenticates the various types of information received in step S152 (step S153). The data processing unit 54 causes the storing/reading unit 59 to read device information and management information of the image capturing apparatus 10 corresponding to the serial number received in step S152 from the device information management DB 5003 and the account management DB 5004 (step S154).

The transmitting and receiving unit 51 transmits the device information and the management information read in step S154 to the communication terminal 90A. The transmitting and receiving unit 91 of the communication terminal 90A receives the device information and the management information transmitted from the server 50 (step S 155). The display control unit 93 causes the display 906 to display the device information and the management information received in step S155 (step S156).

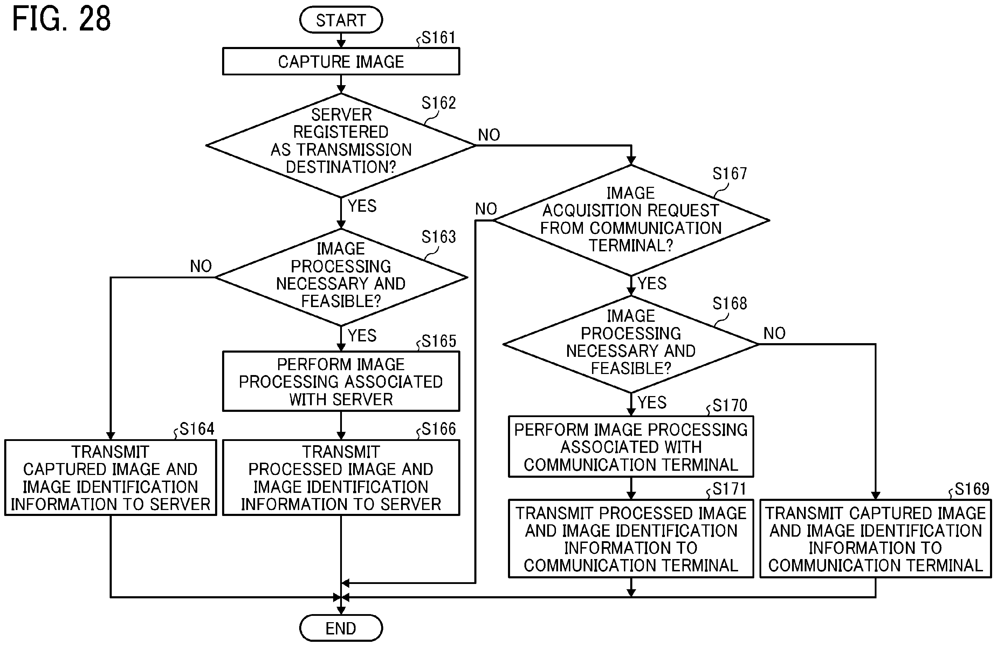

FIG. 28 is a flowchart illustrating an example of an image transmission process performed by the image capturing apparatus 10 according to the present embodiment.

The image capturing control unit 13 causes the still image capturing unit 15 or the moving image capturing unit 14 to capture a still image or a moving image by using a predetermined condition as a trigger. The storing/reading unit 19 stores a captured image indicating the captured still image or moving image in the image management DB 1002 (step S161).

The data management unit 17 checks the information indicating transmission paths stored in the storage unit 1000 through the storing/reading unit 19 to determine whether a transmission path for direct transmission to the server 50 has been registered (step S162), determines whether image processing is necessary, based on the image-processing setting information stored in the setting information management DB 1001, and determines whether image processing is feasible, based on load information or the like of the CPU 111 (step S163).

If image processing is neither necessary nor feasible, the transmitting and receiving unit 11 transmits, to the server 50, the captured image obtained in step S161 and image identification information indicating that the captured image is to be transmitted (step S164).

If image processing is necessary and feasible, the image processing unit 16 causes the storing/reading unit 19 to read the image-capturing-apparatus-side image processing information from the setting information management DB 1001 illustrated in FIG. 16A, and performs image processing indicated by the image-capturing-apparatus-side image processing information on the still image or moving image captured in step S161 to generate a processed image. The storing/reading unit 19 stores the processed image, which indicates the still image or moving image subjected to the image processing by the image processing unit 16, in the image management DB 1002 in association with the captured image (step S 165).

The image-capturing-apparatus-side image processing information in the setting information management DB 1001 illustrated in FIG. 16A is set in association with the transmission path for direct transmission to the server 50.

Then, the transmitting and receiving unit 11 transmits, to the server 50, the processed image obtained by performing the image processing in step S165 and image identification information indicating that the processed image is to be transmitted and indicating the image processing performed in step S 165 (step S166).

If it is determined in step S 162 that the transmission path for direct transmission to the server 50 has not been registered, the data management unit 17 determines whether the transmitting and receiving unit 11 has received an image acquisition request from the communication terminal 90 (step S167).

If an image acquisition request has been received, the data management unit 17 determines whether image processing is necessary, based on the image-processing setting information stored in the setting information management DB 1001, and determines whether image processing is feasible, based on the load information or the like of the CPU 111 (step S168).

If image processing is neither necessary nor feasible, the transmitting and receiving unit 11 transmits, to the communication terminal 90, the captured image obtained in step S161 and image identification information indicating that the captured image is to be transmitted (step S169).

If image processing is necessary and feasible, the image processing unit 16 causes the storing/reading unit 19 to read the image-capturing-apparatus-side image processing information from the setting information management DB 1001 illustrated in FIG. 16C, and performs image processing indicated by the image-capturing-apparatus-side image processing information on the still image or moving image captured in step S161 to generate a processed image. The storing/reading unit 19 stores the processed image, which indicates the still image or moving image subjected to the image processing by the image processing unit 16, in the image management DB 1002 in association with the captured image (step S 170).

The image-capturing-apparatus-side image processing information in the setting information management DB 1001 illustrated in FIG. 16C is set in association with a transmission path for transmission to the server 50 via the communication terminal 90.

The transmitting and receiving unit 11 transmits, to the communication terminal 90, the processed image obtained by performing the image processing in step S 170 and image identification information indicating that the processed image is to be transmitted and indicating the image processing performed in step S 170 (step S171).

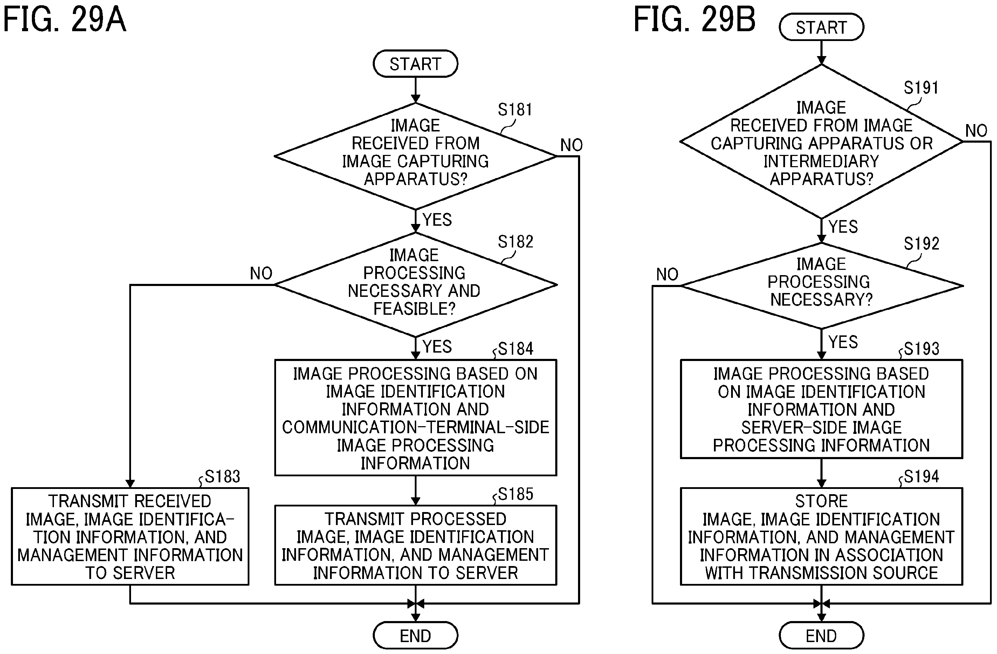

FIG. 29A is a flowchart illustrating an example of an image transmission and reception process performed by the communication terminal 90 according to the present embodiment.

The data control unit 95 of the communication terminal 90 determines whether the transmitting and receiving unit 91 has received an image from the image capturing apparatus 10 (step S181).

If an image has been received, the data control unit 95 determines whether image processing is necessary, based on the image-processing setting information stored in the setting information management DB 1001 and the image identification information received together with the image in step S181, and determines whether image processing is feasible, based on the load information of the CPU 111 (step S182).

If image processing is neither necessary nor feasible ("NO" at S 182), the transmitting and receiving unit 91 adds management information of the image capturing apparatus 10, which is read from the storage unit 9000 by the storing/reading unit 99, to the image received in step S181 and the image identification information received together with the image, and transmits the image, the image identification information, and the management information to the server 50 (step S183).

If image processing is necessary and feasible ("YES" at S182), the image processing unit 94 causes the storing/reading unit 99 to read the communication-terminal-side image processing information from the setting information management DB 9001 illustrated in FIG. 16B or 16C, and performs image processing on the image received in step S181, based on the communication-terminal-side image processing information and the image identification information received in step S181, to generate a processed image. The data control unit 95 causes the storing/reading unit 99 to store the processed image, which is obtained by performing the image processing by the image processing unit 94, in the image management DB 9002 (step S184).

More specifically, if the image identification information received in step S181 matches the image-capturing-apparatus-side image processing information illustrated in FIG. 16C, the image processing unit 94 performs communication-terminal-side image processing illustrated in FIG. 16C.

On the other hand, if the image identification information received in step S181 does not match the image-capturing-apparatus-side image processing information illustrated in FIG. 16C, the image processing unit 94 determines that not all of the image processing to be performed by the image capturing apparatus 10 has successfully been performed, and performs the image processing that has not been performed by the image capturing apparatus 10 and the communication-terminal-side image processing illustrated in FIG. 16C.

The transmitting and receiving unit 11 adds the management information of the image capturing apparatus 10 to the processed image obtained by performing the image processing in step S184 and image identification information indicating that the processed image is to be transmitted and indicating the image processing performed in step S184, and transmits the processed image, the image identification information, and the management information to the server 50 (step S185), as in step S183.

FIG. 29B is a flowchart illustrating an example of an image reception process performed by the server 50 according to the present embodiment.

The determination unit 55 of the server 50 determines whether the transmitting and receiving unit 51 has received an image from the image capturing apparatus 10 or the communication terminal 90 (the intermediary apparatus) (step S191).

If the image has not been received ("NO" at S191), the operation ends.

If the image has been received ("YES" at S191), the determination unit 55 determines whether image processing by the CPU 501 is necessary, based on the server-side image-processing information stored in the setting information management DB 5001 and the image identification information received together with the image in step S191 (step S192).

If image processing is not necessary ("NO" at S192), the operation ends.

If image processing is necessary ("YES" at S192), the image processing unit 57 performs image processing on the image received in step S191, based on the server-side image processing information and the image identification information received in step S191, to generate a processed image (step S193).

The data processing unit 54 causes the storing/reading unit 59 to store the processed image, which is obtained by performing the image processing in step S193, in the image management DB 5002 (step S194). The data processing unit 54 further causes the storing/reading unit 59 to store the image identification information of the processed image obtained in step S193, and management information, in the account management DB 5004 in association with the device information of a transmission source such as the image capturing apparatus 10 or the communication terminal 90 (the intermediary apparatus).

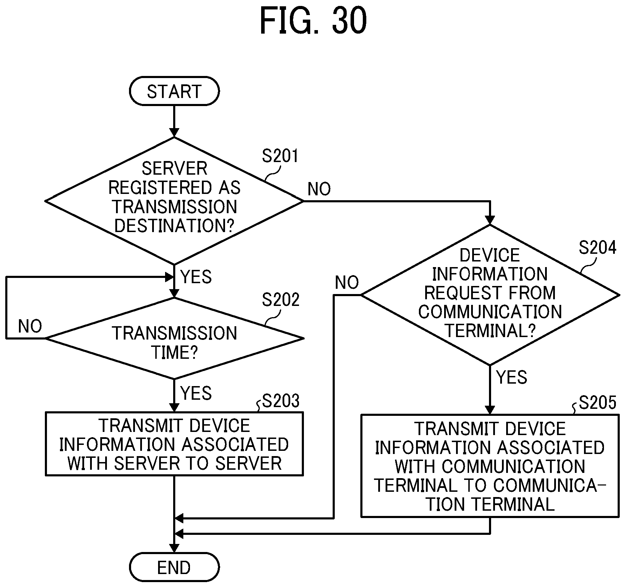

FIG. 30 is a flowchart illustrating an example of a device information transmission process performed by the image capturing apparatus 10 according to the present embodiment.

The data management unit 17 checks the information indicating transmission paths stored in the storage unit 1000 through the storing/reading unit 19 to determine whether a transmission path for direct transmission to the server 50 has been registered (step S201), and determines whether a predetermined transmission time, such as a time of activating the image capturing apparatus 10 or a regular time, has been reached (step S202).

If the transmission time has been reached, the data management unit 17 causes the storing/reading unit 19 to read device information receivable by the server 50 from the device information management DB 1003. The transmitting and receiving unit 11 transmits the device information read from the storage unit 1000 to the server 50, together with an application ID and a virtual device ID (step S203).

If it is determined in step S201 that the transmission path for direct transmission to the server 50 has not been registered, the data management unit 17 determines whether the transmitting and receiving unit 11 has received an acquisition request for acquiring device information from the communication terminal 90 (step S204).

If the acquisition request has been received, the data management unit 17 causes the storing/reading unit 19 to read device information receivable by the communication terminal 90 from the storage unit 1000. The transmitting and receiving unit 11 transmits the device information read from the storage unit 1000 to the communication terminal 90, together with the virtual device ID (step S205).

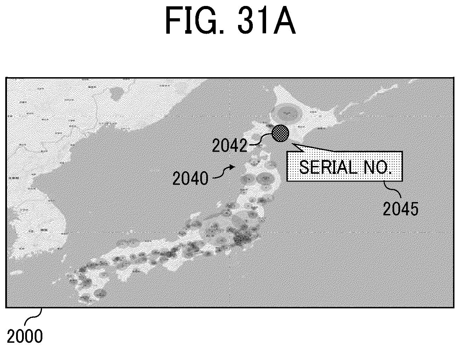

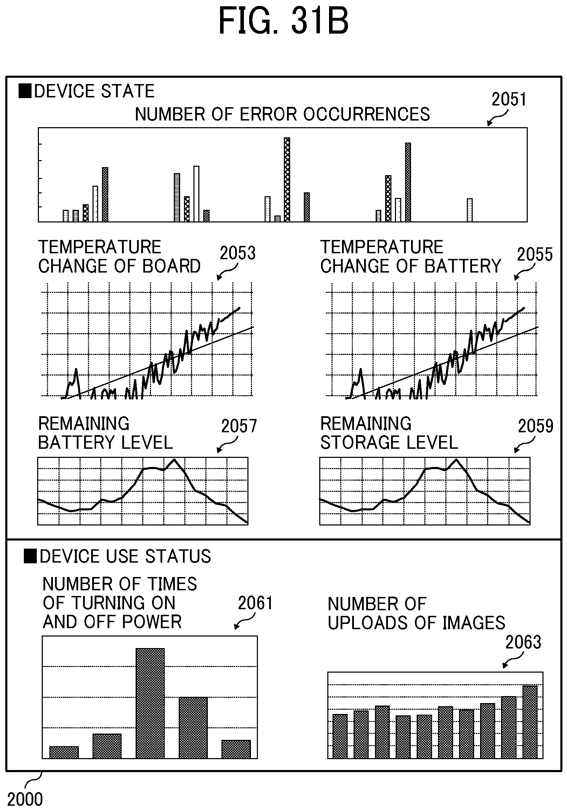

FIGs. 31A and 31B are illustrations of examples of a display screen of device information according to the present embodiment, and illustrate a display screen 2000 displayed on the display 906 by the display control unit 93 of the communication terminal 90 or 90A in step S140 in FIG. 26 or step S156 in FIG. 27.

As illustrated in FIG. 31A, the display control unit 93 displays a map 2040, a position 2042 on the map 2040, which is based on position information of the image capturing apparatus 10, and a serial number 2045 on the display screen 2000. The position information of the image capturing apparatus 10 and the serial number are included in the device information.

As illustrated in FIG. 31B, the display screen 2000 includes a time-series graph 2051 indicating the number of error occurrences based on error information of the image capturing apparatus 10, and a time-series graph 2053 indicating a temperature change based on temperature information of a board. The display screen 2000 further includes a time-series graph 2055 indicating a temperature change based on temperature information of a battery, a time-series graph 2057 indicating a change in remaining level based on remaining level information of the battery, and a time-series graph 2059 indicating a change in remaining level based on remaining level information of a storage. The display screen 2000 further includes a time-series graph 2061 indicating the number of times of turning on and off the power, which is based on power on/off information of the image capturing apparatus 10, and a time-series graph 2063 indicating the number of uploads based on the number of transmissions of images. The error information of the image capturing apparatus 10, the temperature information of the board, the temperature information of the battery, the remaining level information of the battery, the remaining level information of the storage, the power on/off information of the image capturing apparatus 10, and the number of transmissions of images are included in the device information.

The communication terminal 90 provided with an in-house developed transmission/reception application can display all of the information illustrated in FIGs. 31A and 31B on the display screen 2000. However, in some cases, not all of the device information is transmittable or receivable by the communication terminal 90A provided with a third-party developed transmission/reception application, which may result in the display of some of the information illustrated in FIGs. 31A and 31B on the display screen 2000 being missing.

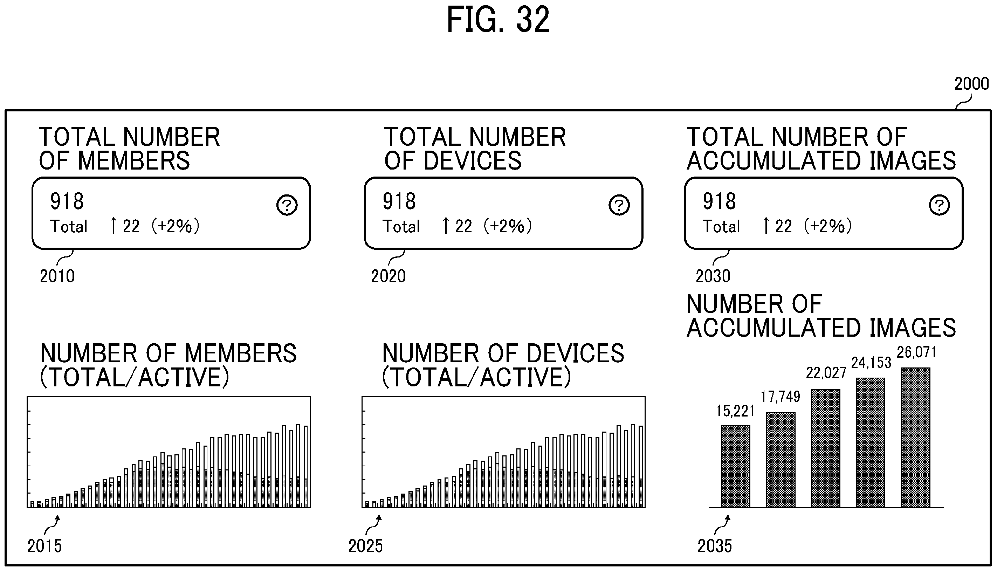

FIG. 32 is an illustration of an example of a display screen of management information according to the present embodiment, and illustrates a display screen 2000 displayed on the display 906 by the display control unit 93 of the communication terminal 90 or 90A in step S140 in FIG. 26 or step S156 in FIG. 27.

The display control unit 93 displays, on the display screen 2000, the number of members 2010 based on user IDs and a team ID obtained from the account management DB 5004, a time-series graph 2015 indicating a change in the number of members, the number of devices (image capturing apparatuses) 2020 based on virtual device IDs obtained from the account management DB 5004, a time-series graph 2025 indicating a change in the number of devices, the number of accumulated images 2030 obtained from the image management DB 5002, and a time-series graph 2035 indicating a change in the number of accumulated images. The user IDs, the team ID, the virtual device IDs, and the number of accumulated images are included in the management information.

The communication terminal 90 provided with an in-house developed transmission/reception application can display all of the information illustrated in FIG. 32 on the display screen 2000. However, the team ID is not handled as management information in the communication terminal 90A provided with a third-party developed transmission/reception application, and thus some of the information illustrated in FIG. 32, namely, at least the number of members 2010 and the time-series graph 2015, is not displayed on the display screen 2000.

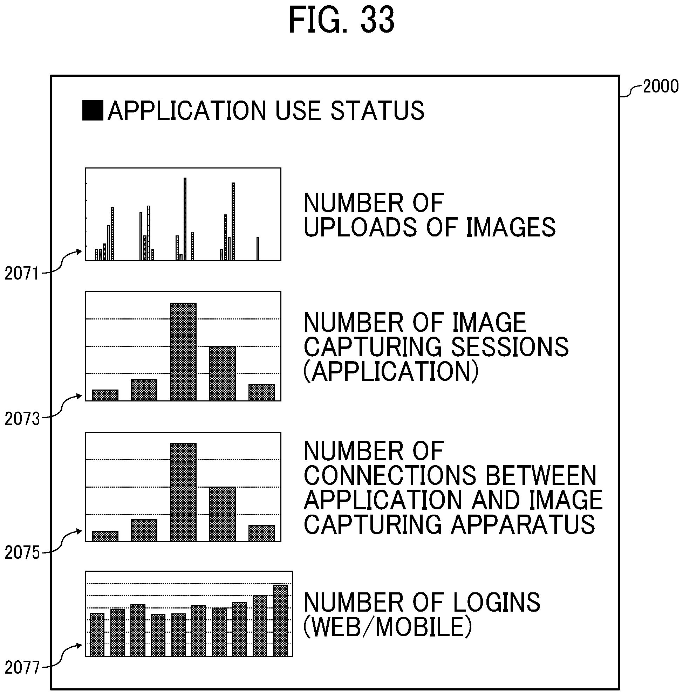

FIG. 33 is an illustration of another example of a display screen of management information according to the present embodiment, and illustrates a display screen 2000 displayed on the display 906 by the display control unit 93 of the communication terminal 90 or 90A in step S140 in FIG. 26 or step S156 in FIG. 27.

The display control unit 93 displays, on the display screen 2000, information on a specific application based on an application ID obtained from the account management DB 5004, namely, a time-series graph 2071 indicating a change in the number of uploaded images based on the number of items of image data obtained from the account management DB 5004, a time-series graph 2073 indicating a change in the number of times image capturing is performed, which is based on the number of image capturing sessions obtained from the device information management DB 5003, a time-series graph 2075 indicating a change in the number of connections based on the number of connections between the application and an image capturing apparatus obtained from the device information management DB 5003, and a time-series graph 2077 indicating a change in the number of logins based on the number of logins to the communication terminal 90 or 90A as management information.

The information illustrated in FIG. 33 is information different for each of the applications used by the communication terminals 90 and 90A.

As described above, the image capturing apparatus 10 or the communication terminal 90, which is an example of a transmission source apparatus, and the server 50, which is an example of a transmission destination apparatus, are configured to be available to, for example, but not limited to, a real estate agent that manages or sells real estate properties, a real estate agent that introduces real estate properties, and a construction company that manages structures such as buildings.

Digital twin, which combines the real world and the virtual space, is a new technology that utilizes the Internet of Things (IoT), in which all things connect to the Internet to perform communication, artificial intelligence (AI), augmented reality (AR), which provides information to the real world to expand the real world, virtual reality (VR), which allows the viewer to perceive the virtual space as real. The digital twin is being utilized in manufacturing industries such as automobiles and production facilities in factories because the digital twin enables an actual sensor to collect and analyze data in real time, evaluate risks, and identify the causes of failures and errors.

In another embodiment, a mobile apparatus, a production facility in a factory, or the like may have the functional configuration of the image capturing apparatus 10 described in the above-described embodiment. Examples of the mobile apparatus include a vehicle, an aircraft, a ship, and a mobile robot.

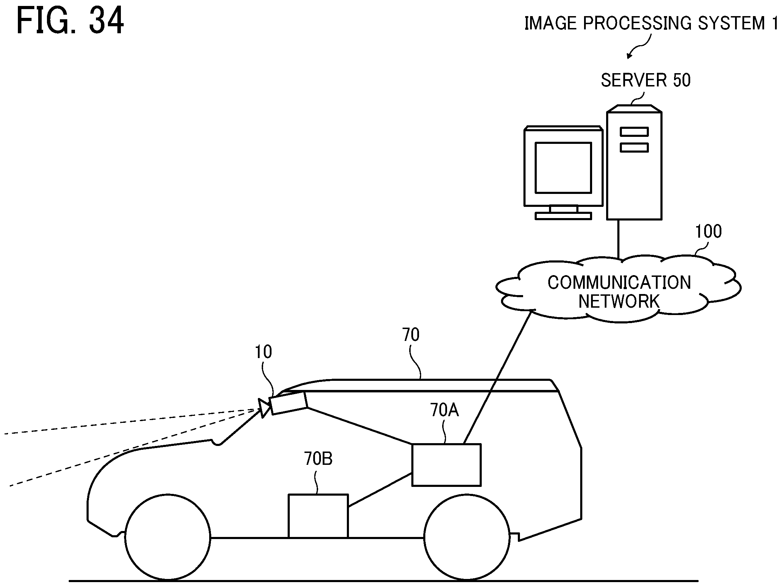

FIG. 34 is a diagram illustrating an example of a general arrangement of an image processing system according to a modification of an embodiment.

An image processing system 1 illustrated in FIG. 34 includes an automobile 70, which is an example of a mobile apparatus, and a server 50. The automobile 70 includes an image capturing apparatus 10 serving as a drive recorder, a control device 70A, and a sensor data storage unit 70B.

The server 50 and the control device 70A of the automobile 70 in the image processing system 1 can communicate with each other via a communication network 100. The image capturing apparatus 10 and the sensor data storage unit 70B can each communicate with the control device 70A.

That is, the image capturing apparatus 10 can communicate with the server 50 via the control device 70A and the communication network 100. The sensor data storage unit 70B is a modification of the device information management DB 1003 illustrated in FIG. 13, and stores and manages data obtained by various sensors included in the automobile 70.

The image processing system 1 illustrated in FIG. 34 directly transmits data obtained by various sensors included in the automobile 70 and video captured by the image capturing apparatus 10 serving as a drive recorder to the server 50 of an automobile manufacturer.

The owner of the automobile 70 has a contract with the automobile manufacturer for a service in which data related to the traveling of the automobile 70, which is obtained by various sensors, and video captured by the drive recorder are uploaded to the server 50 of the automobile manufacturer and the automobile manufacturer analyzes the data and the video and provides various analysis results, for example, the driving safety of the owner and a notification of maintenance or part replacement, to the owner. The automobile 70 insured under the contract for the service described above is provided with a transmission path for directly transmitting obtained data and captured video from a wireless communication module included in the automobile 70 to the server 50 of the automobile manufacturer.

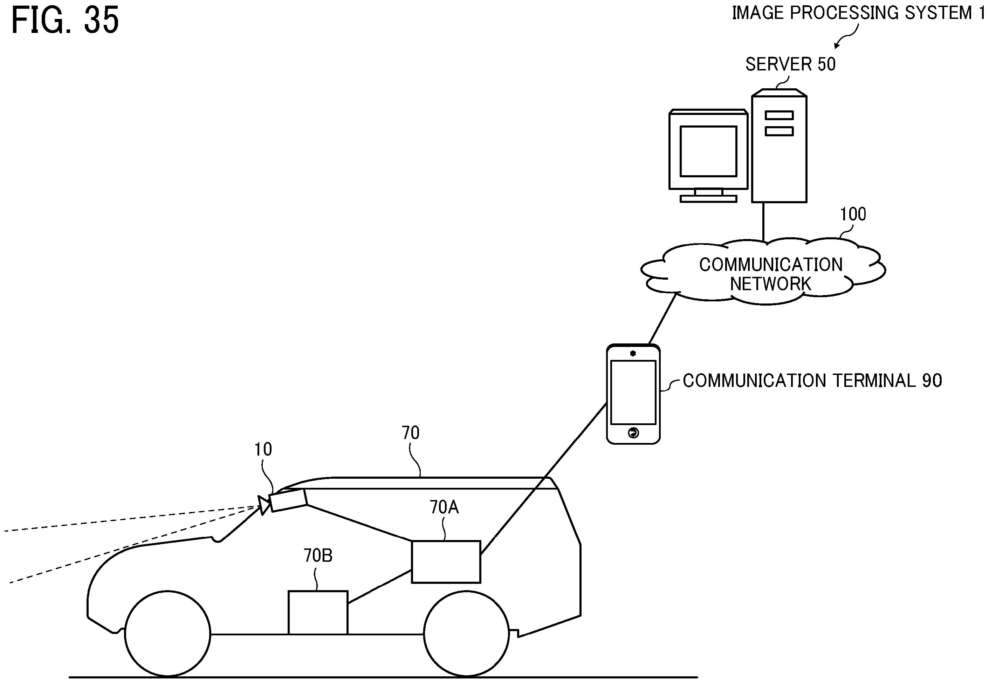

FIG. 35 is a diagram illustrating an example of a general arrangement of an image processing system according to a second modification of an embodiment of the present disclosure.

An image processing system 1 illustrated in FIG. 35 includes a communication terminal 90, an automobile 70, which is an example of a mobile apparatus, and a server 50. The automobile 70 includes an image capturing apparatus 10 serving as a drive recorder, a control device 70A, and a sensor data storage unit 70B.

The server 50 and the communication terminal 90 in the image processing system 1 can communicate with each other via a communication network 100. The image capturing apparatus 10 and the sensor data storage unit 70B can each communicate with the communication terminal 90 via the control device 70A.

That is, the image capturing apparatus 10 can communicate with the server 50 via the control device 70A, the communication terminal 90, and the communication network 100. The sensor data storage unit 70B is a modification of the device information management DB 1003 illustrated in FIG. 13, and stores and manages data obtained by various sensors included in the automobile 70.

The image processing system 1 illustrated in FIG. 35 transmits data obtained by various sensors included in the automobile 70 and video captured by the image capturing apparatus 10 serving as a drive recorder to the server 50 of an insurance company via the communication terminal 90.

The owner of the automobile 70 has a contract for automobile insurance from the insurance company, and, when the automobile 70 has an accident, the owner of the automobile 70 promptly notifies the insurance company of the occurrence of the accident. At this time, the owner activates an application of the insurance company installed in the communication terminal 90, and the application obtains data related to the automobile 70 at the time of the accident (e.g., speed, brake timing, steering wheel operation, damaged parts, and so on) and video captured by the drive recorder at the time of the accident from the automobile 70 and uploads the data and the video to the server 50 of the insurance company. Accordingly, the insurance company can ascertain the circumstances of the accident from the data and the video and acquire evidence to be used to negotiate comparative negligence or the like with the other party.

As described above, a form in which data or video to be uploaded is directly transmitted to the server 50 for real-time uploading of data of various sensors or captured video and a form in which data or video to be uploaded is transmitted via the communication terminal 90 as appropriate can be selectively used.

In another embodiment, the present disclosure is applicable to a monitoring camera system for monitoring, for example, a bank, a retail store where a retailer sells products, or a road or an urban area managed by a local government. In this case, in the example illustrated in FIG. 1, the image capturing apparatus 10 is installed at a predetermined monitoring position such as a ceiling or a wall in a monitoring target such as a bank or a retail store.

When the monitoring target is a road or an urban area, the image capturing apparatus 10 is installed in a structure such as a pedestrian bridge or an electric pole. The server 50 may be owned by an image management company that manages images or may be owned by the bank, the retail store, or the local government.

The communication terminal 90 may be owned by the bank, the retail store, or the local government or by a security company that provides security to the monitoring target, or may be owned by both.

In an application for monitoring the monitoring target, a captured image may be desirably shared in real time (instantaneously). In this case, the image capturing apparatus 10 performs image processing with a relatively small load, which is of a level that at least a user can check the resulting image, and shares image processing with the server 50.

The server 50 performs image processing with a relatively large load, such as object detection processing. Accordingly, the image capturing apparatus 10 can quickly share an image with the server 50, and a captured image can be efficiently used when the image capturing apparatus 10 is applied to a monitoring camera system.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

Further, numerous additional modifications and variations are possible in light of the above teachings, for example, as described in the following aspects.

First Aspect

In a first aspect, an image capturing apparatus 10 includes a transmitting and receiving unit 11. The transmitting and receiving unit 11 transmits at least one of an image captured by the image capturing apparatus 10 and other information different from the image to a server 50 via a first transmission path that passes through a communication terminal 90 or a second transmission path that does not pass through the communication terminal 90. The transmitting and receiving unit 11 transmits the other information, which is determined in accordance with each of the first transmission path and the second transmission path, to the server 50 via the first transmission path or the second transmission path. The server 50 is an example of a transmission destination apparatus, and the communication terminal 90 is an example of an intermediary apparatus.

With this configuration, in transmission of information from the image capturing apparatus 10 to the server 50, optimum data collection and data processing can be performed in accordance with a transmission path. That is, the image capturing apparatus 10 can transmit other information determined for each transmission path to the server 50.

The transmitting and receiving unit 11 may transmit the image and the other information at the same time, or may transmit the image and the other information at different times.

Second Aspect

According to a second aspect, the image capturing apparatus 10 of the first aspect further includes a data management unit 17. The data management unit 17 is an example of a determination means for determining the other information in accordance with each of the first transmission path and the second transmission path. The determination means may be included in the server 50 or the communication terminal 90. In a case where the determination means is included in the server 50 or the communication terminal 90, the transmitting and receiving unit 11 transmits the other information, which is determined by the server 50 or the communication terminal 90, to the server 50 via the first transmission path or the second transmission path.

Third Aspect

According to a third aspect, in the image capturing apparatus 10 of the first aspect or the second aspect, the other information is determined in accordance with an application that is installed in the communication terminal 90 and handles reception of the other information from the image capturing apparatus 10 and transmission of the other information to the server 50.

With this configuration, other information specified in an application installed in the communication terminal 90 can be transmitted from the image capturing apparatus 10 to the server 50 via the communication terminal 90.

Fourth Aspect

According to a fourth aspect, the image capturing apparatus 10 of the first aspect or the second aspect further includes an image processing unit 16. The image processing unit 16 performs image processing on the image. The transmitting and receiving unit 11 transmits the other information to the server 50 via the first transmission path or the second transmission path in association with the image or a processed image obtained by performing the image processing on the image. The other information includes image identification information indicating whether the image processing has been performed or indicating a type of the processed image.

With this configuration, the image identification information indicating whether the image processing has been performed or indicating the type of the processed image can be transmitted from the image capturing apparatus 10 to the server 50. Thus, any one of the image capturing apparatus 10, the communication terminal 90, and the server 50 may perform image processing on the image, and flexible image processing can be implemented. In a case where the image to be transmitted is a captured image, the transmitting and receiving unit 11 may transmit no image identification information.

Fifth Aspect

According to a fifth aspect, in the image capturing apparatus 10 of the fourth aspect, based on image-processing setting information that is information in which first image processing to be performed by the image capturing apparatus 10 and second image processing to be performed by the communication terminal 90 or the server 50 are set, the image processing unit 16 performs the first image processing on the captured image.

With this configuration, the image capturing apparatus 10 and the communication terminal 90 or the server 50 can perform image processing in a shared manner as appropriate. Specifically, the first image processing and the second image processing do not overlap each other, or the first image processing, which is low-load processing, can be performed by the image capturing apparatus 10, and the second image processing, which is high-load processing, can be performed by the communication terminal 90 or the server 50.

Sixth Aspect

According to a sixth aspect, in the image capturing apparatus 10 of any one of the first aspect to the fifth aspect, the other information includes device information of the image capturing apparatus 10.
With this configuration, device information determined for each transmission path can be transmitted from the image capturing apparatus 10 to the server 50.

Seventh Aspect

In a seventh aspect, a communication terminal 90 includes a transmitting and receiving unit 91. The transmitting and receiving unit 91 serves as a receiving means for receiving at least one of an image and other information from an image capturing apparatus 10 that transmits at least one of an image captured by the image capturing apparatus 10 and other information different from the image to a server 50 via a first transmission path that passes through the communication terminal 90 or a second transmission path that does not pass through the communication terminal 90. The other information is information determined in accordance with each of the first transmission path and the second transmission path. The transmitting and receiving unit 91 serves as a transmitting means and transmits the received image and at least one of the other information and second other information different from the other information to the server 50.
With this configuration, an image transmitted from the image capturing apparatus 10 can be transferred to the server 50, and other information determined for each transmission path can be transmitted from the image capturing apparatus 10 to the server 50 via the communication terminal 90, or second other information instead of the other information can be transmitted to the server 50.

Eighth Aspect

According to an eighth aspect, the communication terminal 90 of the seventh aspect further includes an image processing unit 94. The image processing unit 94 performs image processing on the image received by the transmitting and receiving unit 91. The transmitting and receiving unit 91 serves as a transmitting means and transmits a processed image obtained by performing the image processing on the received image, instead of the received image, to the server 50.
With this configuration, instead of the received image, a processed image obtained by performing image processing on the received image can be transferred to the server 50.

Ninth Aspect

According to a ninth aspect, in the communication terminal 90 of the eighth aspect, the other information includes image identification information indicating whether the image received by the transmitting and receiving unit 91 is a processed image obtained by the image capturing apparatus 10 performing image processing or indicating a type of the processed image, the transmitting and receiving unit 91 receives the image identification information in association with the image, and the image processing unit 94 performs image processing based on the image identification information.
With this configuration, for example, in a case where the received image is not the processed image, image processing is performed on the received image, and in a case where the received image is the processed image, image processing is not performed on the received image, thereby making it possible to reliably transmit the processed image to the server 50 and prevent the same image processing from being performed again.

Tenth Aspect

According to a tenth aspect, in the communication terminal 90 of the eighth aspect or the ninth aspect, the transmitting and receiving unit 91 transmits second other information to the server 50 in association with the image received by the transmitting and receiving unit 91 or a processed image obtained by performing image processing on the image, and the second other information includes second image identification information indicating whether the image to be transmitted to the server 50 is the image received by the transmitting and receiving unit 91 or the processed image, or indicating a type of the processed image.
With this configuration, for example, in a case where the received image is not the processed image, the server 50 performs image processing on the received image, and in a case where the received image is the processed image, the server 50 does not perform image processing on the received image, thereby making it possible to reliably obtain the processed image and prevent the same image processing from being performed again.
In a case where the received image is a captured image and the image to be transmitted is also the captured image, the transmitting and receiving unit 91 may transmit no image identification information.

Eleventh Aspect

According to an eleventh aspect, in the communication terminal 90 of any one of the eighth aspect to the tenth aspect, based on image-processing setting information that is information in which first image processing to be performed by the image capturing apparatus 10 and second image processing to be performed by the communication terminal 90 are set, the image processing unit 94 performs at least the second image processing on the image received by the transmitting and receiving unit 91.

With this configuration, the image capturing apparatus 10 and the communication terminal 90 can perform image processing in a shared manner as appropriate. Specifically, the first image processing and the second image processing do not overlap each other, or the first image processing, which is low-load processing, can be performed by the image capturing apparatus 10, and the second image processing, which is high-load processing, can be performed by the communication terminal 90.

Twelfth Aspect

According to a twelfth aspect, in the communication terminal 90 of any one of the seventh aspect to the eleventh aspect, the other information includes device information of the image capturing apparatus 10.

With this configuration, device information determined for each transmission path can be transmitted from the image capturing apparatus 10 to the server 50 via the communication terminal 90.

Thirteenth Aspect

According to a thirteenth aspect, in the communication terminal 90 of any one of the seventh aspect to the twelfth aspect, the second other information includes management information of the image capturing apparatus 10.

With this configuration, the management information can be transmitted to the server 50.

Fourteenth Aspect

In a fourteenth aspect, a server 50 includes a transmitting and receiving unit 51. The transmitting and receiving unit 51 receives, from an image capturing apparatus 10, at least one of an image captured by the image capturing apparatus 10 and other information different from the image via a first transmission path that passes through a communication terminal 90 or a second transmission path that does not pass through the communication terminal 90. The other information is information determined in accordance with each of the first transmission path and the second transmission path.

With this configuration, in reception of information from the image capturing apparatus 10, optimum data collection and data processing can be performed in accordance with a transmission path. That is, the server 50 can receive other information determined for each transmission path from the image capturing apparatus 10.

Fifteenth Aspect

According to a fifteenth aspect, in the server 50 of the fourteenth aspect, the other information includes image identification information indicating whether the image received by the transmitting and receiving unit 51 is a processed image obtained by performing image processing on a captured image of a subject or indicating a type of the processed image, and the transmitting and receiving unit 51 receives the image identification information in association with the image.

With this configuration, the server 50 can grasp whether the received image is a processed image or grasp the type of the processed image. In a case where the image identification information is not received in association with the image, the received image can be recognized as the captured image.

Sixteenth Aspect

According to a sixteenth aspect, in the server 50 of the fourteenth aspect or the fifteenth aspect, the transmitting and receiving unit 51 receives an image transmitted from the image capturing apparatus 10 via the first transmission path and receives second other information different from the other information from the communication terminal 90.

With this configuration, the image and the second other information can be received from the communication terminal 90.

Seventeenth Aspect

According to a seventeenth aspect, in the server 50 of the sixteenth aspect, the second other information includes second image identification information indicating whether the image received by the transmitting and receiving unit 51 is a processed image obtained by the communication terminal 90 performing image processing on an image received from the image capturing apparatus 10 or indicating a type of the processed image, and the transmitting and receiving unit 51 receives the second image identification information from the communication terminal 90 in association with the image.

With this configuration, the server 50 can grasp whether the received image is a processed image or grasp the type of the processed image. In a case where the second image identification information is not received in association with the image, the received image can be recognized as the captured image.

Eighteenth Aspect

According to an eighteenth aspect, in the server 50 of the fifteenth aspect or the seventeenth aspect, the server 50 further includes an image processing unit 57. The image processing unit 57 performs image processing on the image received by the transmitting and receiving unit 51, based on the image identification information.

With this configuration, for example, in a case where the received image is not the processed image, the server 50 performs image processing on the received image, and in a case where the received image is the processed image, the server 50 does not perform image processing on the received image, thereby making it possible to reliably obtain the processed image and prevent the same image processing from being performed again.

Nineteenth Aspect

According to a nineteenth aspect, in the server 50 of any one of the fourteenth aspect to the eighteenth aspect, based on image-processing setting information that is information in which first image processing to be performed by the image capturing apparatus 10 or the communication terminal 90 and second image processing to be performed by the server 50 are set, the image processing unit 57 performs at least the second image processing on the image received by the transmitting and receiving unit 51.

With this configuration, the image capturing apparatus 10 or the communication terminal 90 and the server 50 can perform image processing in a shared manner as appropriate. Specifically, the first image processing and the second image processing do not overlap each other, or the first image processing, which is low-load processing, can be performed by the image capturing apparatus 10 or the communication terminal 90, and the second image processing, which is high-load processing, can be performed by the server 50.

Twentieth Aspect

According to a twentieth aspect, in the server 50 of any one of the fourteenth aspect to the nineteenth aspect, the other information includes device information of the image capturing apparatus 10.

With this configuration, device information determined for each transmission path can be received from the image capturing apparatus 10.

Twenty-First Aspect

According to a twenty-first aspect, in the server 50 of the sixteenth aspect or the seventeenth aspect, the second other information includes management information of the image capturing apparatus 10.

With this configuration, the management information can be received from the communication terminal 90.

Twenty-Second Aspect

In a twenty-second aspect, a transmission method executed by an image capturing apparatus 10 connectable to a server 50 includes transmitting at least one of an image captured by the image capturing apparatus 10 and other information different from the image to the server 50 via a first transmission path that passes through a communication terminal 90 or a second transmission path that does not pass through the communication terminal 90. The other information is information determined in accordance with each of the first transmission path and the second transmission path.

Twenty-Third Aspect

In a twenty-third aspect, a transmission and reception method executed by a communication terminal 90 includes receiving at least one of an image and other information from an image capturing apparatus 10 that transmits at least one of an image captured by the image capturing apparatus 10 and other information different from the image to a server 50 via a first transmission path that passes through the communication terminal 90 or a second transmission path that does not pass through the communication terminal 90; and transmitting the image and at least one of the other information and second other information different from the other information to the server 50. The other information is information determined in accordance with each of the first transmission path and the second transmission path.

Twenty-Fourth Aspect

In a twenty-fourth aspect, a reception method executed by a server 50 includes receiving, from an image capturing apparatus 10, at least one of an image captured by the image capturing apparatus 10 and other information different from the image via a first transmission path that passes through a communication terminal 90 or a second transmission path that does not pass through the communication terminal 90. The other information is information determined in accordance with each of the first transmission path and the second transmission path.

Twenty-Fifth Aspect

In a twenty-fifth aspect, a program executed by an image capturing apparatus 10 connectable to a server 50 causes a computer to execute transmitting at least one of an image captured by the image capturing apparatus 10 and other information different from the image to the server 50 via a first transmission path that passes through a communication terminal 90 or a second transmission path that does not pass through the communication terminal 90. The other information is information determined in accordance with each of the first transmission path and the second transmission path.

Twenty-Sixth Aspect

In a twenty-sixth aspect, a program executed by a communication terminal 90 causes a computer to execute receiving at least one of an image and other information from an image capturing apparatus 10 that transmits at least one of an image captured by the image capturing apparatus 10 and other information different from the image to a server 50 via a first transmission path that passes through the communication terminal 90 or a second transmission path that does not pass through the communication terminal 90; and transmitting the image and at least one of the other information and second other information different from the other information to the server 50. The other information is information determined in accordance with each of the first transmission path and the second transmission path.

Twenty-Seventh Aspect

In a twenty-seventh aspect, a program executed by a server 50 causes a computer to execute receiving, from an image capturing apparatus 10, at least one of an image captured by the image capturing apparatus 10 and other information different from the image via a first transmission path that passes through a communication terminal 90 or a second transmission path that does not pass through the communication terminal 90. The other information is information determined in accordance with each of the first transmission path and the second transmission path.

Twenty-Eighth Aspect

In a twenty-eighth aspect, an image processing system 1, which is an example of an information processing system, includes an image capturing apparatus 10 and a server 50. The image capturing apparatus 10 includes a transmitting and receiving unit 11. The transmitting and receiving unit 11 transmits at least one of an image captured by the image capturing apparatus 10 and other information different from the image to the server 50 via a first transmission path that passes through the communication terminal 90 or a second transmission path that does not pass through the communication terminal 90. The server 50 includes a transmitting and receiving unit 51. The transmitting and receiving unit 51 receives at least one of the image and the other information from the image capturing apparatus 10 via the first transmission path or the second transmission path. The other information is information determined in accordance with each of the first transmission path and the second transmission path.

Twenty-Ninth Aspect

According to a twenty-ninth aspect, the image processing system 1 of the twenty-eighth aspect further includes the communication terminal 90. The communication terminal 90 includes a transmitting and receiving unit 91. The transmitting and receiving unit 91 serves as a receiving means for receiving an image and other information from the image capturing apparatus 10. The transmitting and receiving unit 91 serves as a transmitting means and transmits the image and at least one of the other information and second other information different from the other information to the server 50.

## Claims

1. An image capturing apparatus (10) comprising:

   an imaging unit (101) configured to capture an image to obtain a captured image; and
   a transmitting and receiving unit (11) configured to transmit other information different from the captured image to a transmission destination apparatus (50) via one transmission path among a first transmission path that passes through an intermediary apparatus (90) and a second transmission path that does not pass through the intermediary apparatus (90), the other information being determined based on the one transmission path.

2. The image capturing apparatus (10) according to claim 1, further comprising a data management unit (17) configured to determine the other information to be transmitted, for each of the first transmission path and the second transmission path.

3. The image capturing apparatus (10) according to claim 2, wherein
   the data management unit (17) is configured to determine the other information in accordance with an application that is installed in the intermediary apparatus (90), the application being configured to control reception of the other information from the image capturing apparatus (10) and transmission of the other information to the transmission destination apparatus (50).

4. The image capturing apparatus (10) according to claim 1 or 2, further comprising

   an image processing unit (16) configured to perform first image processing on the captured image, wherein
   the other information transmitted to the transmission destination apparatus (50) via the one transmission path is associated with the captured image or a processed image obtained by performing the first image processing on the captured image, and

the other information includes image identification information indicating whether the first image processing has been performed or indicating a type of the processed image.

5. The image capturing apparatus (10) according to claim 4, wherein

the image processing unit (16) is configured to perform the first image processing on the captured image, based on image-processing setting information, the image-processing setting information indicating the first image processing to be performed and second image processing to be performed by the intermediary apparatus (90) or the transmission destination apparatus (50).

6. The image capturing apparatus (10) according to any one of claims 1 to 5, wherein

the other information includes device information of the image capturing apparatus (10).

7. An information processing system (1) comprising:

the image capturing apparatus (10) according to any one of claims 1 to 6; and

the transmission destination apparatus (50), wherein

the transmission destination apparatus (50) includes

a transmitting and receiving unit (51) configured to receive the other information from the image capturing apparatus (10) via the one transmission path among the first transmission path and the second transmission path.

8. The information processing system (1) according to claim 7, further comprising

the intermediary apparatus (90) including a transmitting and receiving unit (91) configured to:

receive the other information from the image capturing apparatus (10); and

transmit the other information and second other information different from the other information to the transmission destination apparatus (50).

9. A method for transmitting information, performed by an image capturing apparatus (10), comprising:

capturing an image to obtain a captured image; and

transmitting other information different from the captured image to a transmission destination apparatus (50) via one transmission path among a first transmission path that passes through an intermediary apparatus (90) and a second transmission path that does not pass through the intermediary apparatus (90), the other information being determined based on the one transmission path.

10. The method according to claim 9, further comprising:
determining the other information to be transmitted, for each of the first transmission path and the second transmission path.

11. The method according to claim 10, wherein the determining incudes:
determining the other information in accordance with an application that is installed in the intermediary apparatus, the application being configured to control reception of the other information from the image capturing apparatus (10) and transmission of the other information to the transmission destination apparatus (50).

12. The method according to claim 10, further comprising:

performing first image processing on the captured image, wherein

the other information transmitted to the transmission destination apparatus (50) via the one transmission path is associated with the captured image or a processed image obtained by performing the first image processing on the captured image, and

the other information includes image identification information indicating whether the first image processing has been performed or indicating a type of the processed image.

13. The method according to claim 12, further comprising:
performing the first image processing on the captured image, based on image-processing setting information, the image-processing setting information indicating the first image processing to be performed and second image processing to be performed by the intermediary apparatus (90) or the transmission destination apparatus (50).

14. The method according to claim 1, wherein the other information includes device information of the image capturing apparatus (10).

# FIG. 1

IMAGE PROCESSING SYSTEM 1

SERVER 50

100

COMMUNICATION
NETWORK

IMAGE CAPTURING
APPARATUS 10

COMMUNICATION
TERMINAL 90

FIG. 2

# FIG. 3A

HEMISPHERICAL IMAGE (FRONT)

# FIG. 3B

HEMISPHERICAL IMAGE (BACK)

# FIG. 3C

CAPTURED IMAGE (EQUIRECTANGULAR PROJECTION IMAGE EC)

FIG. 4B

SPHERICAL IMAGE CE

FIG. 4A

EQUIRECTANGULAR PROJECTION IMAGE EC

## FIG. 5

VIRTUAL CAMERA IC

PREDETERMINED-AREA IMAGE Q (PREDETERMINED AREA T)

SPHERICAL IMAGE CE (SPHERE CS)

VIRTUAL CAMERA IC

SPHERICAL IMAGE CE (SPHERE CS)

PREDETERMINED-AREA IMAGE Q (PREDETERMINED AREA T)

(FRONT)

(SIDE)

PREDETERMINED-AREA IMAGE Q (PREDETERMINED AREA T)

SPHERICAL IMAGE CE (SPHERE CS)

VIRTUAL CAMERA IC

(TOP)

EP 4 529 204 A1

# FIG. 6

# FIG. 7

SPHERICAL IMAGE CE
(SPHERE CS)

PREDETERMINED-AREA IMAGE Q
(PREDETERMINED AREA T)

EP 4 529 204 A1

# FIG. 8A

# FIG. 8B

# FIG. 9A

# FIG. 9B

# FIG. 10A

# FIG. 10B

# FIG. 11

IMAGING UNIT 101

LENS 102a

IMAGING ELEMENT (1) 103a

LENS 102b

IMAGING ELEMENT (2) 103b

IMAGE PROCESSOR 104

IMAGING CONTROLLER 105

MICROPHONE 108

AUDIO PROCESSOR 109

110

CPU 111

ROM 112

SRAM 113

DRAM 114

OPERATION UNIT 115

INPUT/OUTPUT I/F 116

SHORT-RANGE COMMUNICATION CIRCUIT 117

ELECTRONIC COMPASS 118

GYRO SENSOR 119

ACCELERATION SENSOR 120

NETWORK I/F 121

ANTENNA 117a

10

EP 4 529 204 A1

# FIG. 12

50(90)

HD 504(904)

501(901) 502(902) 503(903) 505(905) 506(906) 508(908) 917a / 917

| CPU | ROM | RAM | HDD CONTROLLER | DISPLAY | EXTERNAL DEVICE CONNECTION I/F | SHORT-RANGE COMMUNICATION CIRCUIT |

510(910)

| NETWORK I/F | KEYBOARD | POINTING DEVICE | DVD-RW DRIVE | MEDIUM I/F |

509(909) 511(911) 512(912) 514(914) 516(916)

513(913) 515(915)

MEDIUM

EP 4 529 204 A1

# FIG. 13

**SERVER ~50**

STORAGE UNIT ~5004 ~5003 ~5001 ~5002 ~5000
- ACCOUNT MANAGEMENT DB
- DEVICE INFORMATION MANAGEMENT DB
- SETTING INFORMATION MANAGEMENT DB
- IMAGE MANAGEMENT DB

57 ~ IMAGE PROCESSING UNIT
59 ~ STORING/READING UNIT
55 ~ DETERMINATION UNIT
54 ~ DATA PROCESSING UNIT
52 ~ RECEPTION UNIT
53 ~ AUTHENTICATION UNIT
51 ~ TRANSMITTING AND RECEIVING UNIT

COMMUNICATION NETWORK 100

**IMAGE CAPTURING APPARATUS 10**

12 ~ OPERATION RECEIVING UNIT
11 ~ TRANSMITTING AND RECEIVING UNIT
14 ~ MOVING IMAGE CAPTURING UNIT
13 ~ IMAGE CAPTURING CONTROL UNIT
16 ~ IMAGE PROCESSING UNIT
15 ~ STILL IMAGE CAPTURING UNIT
19 ~ STORING/READING UNIT
17 ~ DATA MANAGEMENT UNIT

STORAGE UNIT ~1000
- DEVICE INFORMATION MANAGEMENT DB ~1003
- IMAGE MANAGEMENT DB ~1002
- SETTING INFORMATION MANAGEMENT DB ~1001

**COMMUNICATION TERMINAL 90**

91 ~ TRANSMITTING AND RECEIVING UNIT
99 ~ STORING/READING UNIT
92 ~ RECEPTION UNIT
93 ~ DISPLAY CONTROL UNIT
94 ~ IMAGE PROCESSING UNIT
95 ~ DATA CONTROL UNIT
96 ~ APPLICATION FUNCTION UNIT
97 ~ AUTHENTICATION UNIT

STORAGE UNIT ~9000
- SETTING INFORMATION MANAGEMENT DB ~9001
- IMAGE MANAGEMENT DB ~9002

FIG. 14B

FIG. 14A

## FIG. 15A

5004

| APPLICATION ID | TEAM ID | USER ID | EMAIL ADDRESS | PASSWORD |
|---|---|---|---|---|
| RICOH-APP | TeamA | ZZZZZZZZZZ | example@ricoh.com | ***** |

## FIG. 15B

5004

| APPLICATION ID | TEAM ID | USER ID | VIRTUAL DEVICE ID | SERIAL NO. | IMAGE DATA | DEVICE INFORMATION |
|---|---|---|---|---|---|---|
| RICOH-APP | TeamA | – | 77777777XXX | XXX–YYYYY | PATH TO IMAGE MANAGEMENT DB | PATH TO DEVICE INFORMATION MANAGEMENT DB |
| RICOH-APP | TeamA | ZZZZZZZZZZ | 66666666YYY | MMM–SSSS | PATH TO IMAGE MANAGEMENT DB | PATH TO DEVICE INFORMATION MANAGEMENT DB |

## FIG. 15C

5004

| APPLICATION ID | GROUP ID | VIRTUAL DEVICE ID | SERIAL NO. | IMAGE DATA | DEVICE INFORMATION |
|---|---|---|---|---|---|
| OTHER-APP | – | 00013579 | MMM–HHHH | PATH TO IMAGE MANAGEMENT DB | PATH TO DEVICE INFORMATION MANAGEMENT DB |
| OTHER-APP | COMPANY X | 00098765 | NNN–TTTT | PATH TO IMAGE MANAGEMENT DB | PATH TO DEVICE INFORMATION MANAGEMENT DB |

# FIG. 16A

1001, 5001

| TEAM ID | VIRTUAL DEVICE ID | IMAGE-CAPTURING-APPARATUS-SIDE IMAGE PROCESSING | SERVER-SIDE IMAGE PROCESSING |
|---|---|---|---|
| TeamA | 77777777XXX | STITCHING PROCESSING, BLUR CORRECTION, ... | SUPER-RESOLUTION PROCESSING, ... |

# FIG. 16B

9001, 5001

| TEAM ID | VIRTUAL DEVICE ID | COMMUNICATION-TERMINAL-SIDE IMAGE PROCESSING | SERVER-SIDE IMAGE PROCESSING |
|---|---|---|---|
| TeamA | 77777777XXX | STITCHING PROCESSING, BLUR CORRECTION, ... | SUPER-RESOLUTION PROCESSING, ... |

# FIG. 16C

1001, 9001

| TEAM ID | VIRTUAL DEVICE ID | IMAGE-CAPTURING-APPARATUS-SIDE IMAGE PROCESSING | COMMUNICATION-TERMINAL-SIDE IMAGE PROCESSING |
|---|---|---|---|
| TeamA | 77777777XXX | BLUR CORRECTION, ... | STITCHING PROCESSING, ... |

EP 4 529 204 A1

# FIG. 17

EP 4 529 204 A1

1003

| TRANSMISSION DESTINATION | SERVER | COMMUNICATION TERMINAL | COMMUNICATION TERMINAL |
|---|---|---|---|
| APPLICATION ID | – | RICOH–APP | OTHER–APP |
| USER ID | – | YES | – |
| GROUP ID | – | – | YES |
| SERIAL NO. | YES | YES | YES |
| UPDATE DATE AND TIME | YES | YES | YES |
| VIRTUAL DEVICE ID | YES | YES | YES |
| BATTERY INFORMATION | YES | – | YES |
| Bluetooth INFORMATION | YES | YES | YES |
| FIRMWARE VER. | YES | YES | YES |
| Model Name | YES | YES | YES |
| AVAILABLE SPACE | YES | YES | YES |
| ERROR INFORMATION | YES | YES | – |
| BATTERY TEMPERATURE INFORMATION | YES | YES | – |
| BOARD TEMPERATURE INFORMATION | YES | YES | – |
| POSITION INFORMATION | YES | YES | – |

# FIG. 18

IMAGE CAPTURING APPARATUS —10

COMMUNICATION TERMINAL —90

SERVER —50

LOGIN —S1

AUTHENTICATE —S2

USER ID S3

AUTHENTICATE S4

ACCOUNT MANAGEMENT DB 5004

REQUEST REGISTRATION —S5

S6

TRANSMISSION PATH, TEAM ID

S7

APPLICATION ID, SERIAL NO., TEAM ID

CHECK REGISTRATION S8

ACCOUNT MANAGEMENT DB 5004

S9

VIRTUAL DEVICE ID S10

EP 4 529 204 A1

## FIG. 19A

IMAGE CAPTURING APPARATUS ~10   COMMUNICATION TERMINAL ~90   SERVER ~50

S21

APPLICATION ID, VIRTUAL DEVICE ID, IMAGE DATA, IMAGE IDENTIFICATION INFORMATION

S22 AUTHENTICATE

5004 ACCOUNT MANAGEMENT DB

5002 IMAGE MANAGEMENT DB

S23

## FIG. 19B

IMAGE CAPTURING APPARATUS ~10   COMMUNICATION TERMINAL ~90   SERVER ~50

S31

APPLICATION ID, VIRTUAL DEVICE ID, DEVICE INFORMATION

S32 AUTHENTICATE

5004 ACCOUNT MANAGEMENT DB

5003 DEVICE INFORMATION MANAGEMENT DB

S33

EP 4 529 204 A1

# FIG. 20

EP 4 529 204 A1

# FIG. 21

EP 4 529 204 A1

# FIG. 22

IMAGE CAPTURING APPARATUS ~10  COMMUNICATION TERMINAL ~90  SERVER ~50

LOGIN ~S81

AUTHENTICATE ~S82

USER ID  S83

S84  AUTHENTICATE ← ACCOUNT MANAGEMENT DB 5004

REQUEST UPLOADING OF DEVICE INFORMATION ~S85

ACQUISITION REQUEST  S86

VIRTUAL DEVICE ID, DEVICE INFORMATION  S87

APPLICATION ID, VIRTUAL DEVICE ID, USER ID, DEVICE INFORMATION, MANAGEMENT INFORMATION  S88

S89  AUTHENTICATE ← ACCOUNT MANAGEMENT DB 5004

S90  DEVICE INFORMATION MANAGEMENT DB 5003

EP 4 529 204 A1

# FIG. 23

EP 4 529 204 A1

FIG. 24

# FIG. 25

IMAGE CAPTURING APPARATUS ~10

COMMUNICATION TERMINAL ~90A, 90B

SERVER ~50

REQUEST UPLOADING OF DEVICE INFORMATION ~S121

ACQUISITION REQUEST S122

S123

VIRTUAL DEVICE ID, DEVICE INFORMATION

S124

APPLICATION ID, VIRTUAL DEVICE ID, USER ID, DEVICE INFORMATION

S125

AUTHENTICATE

ACCOUNT MANAGEMENT DB ~5004

S126

DEVICE INFORMATION MANAGEMENT DB ~5003

# FIG. 26

IMAGE CAPTURING APPARATUS ~10

COMMUNICATION TERMINAL ~90

SERVER ~50

LOGIN ~S131

AUTHENTICATE ~S132

USER ID S133

AUTHENTICATE S134

ACCOUNT MANAGEMENT DB ~5004

REQUEST DISPLAY OF DEVICE INFORMATION ~S135

APPLICATION ID, USER ID, SERIAL NO. S136

AUTHENTICATE S137

ACCOUNT MANAGEMENT DB ~5004

DEVICE INFORMATION, MANAGEMENT INFORMATION S139

S138

DEVICE INFORMATION MANAGEMENT DB ~5003

DISPLAY ~S140

EP 4 529 204 A1

# FIG. 27

IMAGE CAPTURING APPARATUS ~10

COMMUNICATION TERMINAL ~90A

SERVER ~50

REQUEST DISPLAY OF DEVICE INFORMATION ~S151

APPLICATION ID, GROUP ID, SERIAL NO. ~S152

AUTHENTICATE ~S153

ACCOUNT MANAGEMENT DB ~5004

DEVICE INFORMATION, MANAGEMENT INFORMATION ~S155

S154

DEVICE INFORMATION MANAGEMENT DB ~5003

DISPLAY ~S156

EP 4 529 204 A1

# FIG. 28

START

**CAPTURE IMAGE** — S161

↓

**SERVER REGISTERED AS TRANSMISSION DESTINATION?** — S162

- NO →
- YES ↓

**IMAGE PROCESSING NECESSARY AND FEASIBLE?** — S163

- NO →
- YES ↓

**PERFORM IMAGE PROCESSING ASSOCIATED WITH SERVER** — S165

↓

**TRANSMIT CAPTURED IMAGE AND IMAGE IDENTIFICATION INFORMATION TO SERVER** — S164

**TRANSMIT PROCESSED IMAGE AND IMAGE IDENTIFICATION INFORMATION TO SERVER** — S166

**IMAGE ACQUISITION REQUEST FROM COMMUNICATION TERMINAL?** — S167

- NO →
- YES ↓

**IMAGE PROCESSING NECESSARY AND FEASIBLE?** — S168

- NO →
- YES ↓

**PERFORM IMAGE PROCESSING ASSOCIATED WITH COMMUNICATION TERMINAL** — S170

↓

**TRANSMIT PROCESSED IMAGE AND IMAGE IDENTIFICATION INFORMATION TO COMMUNICATION TERMINAL** — S171

**TRANSMIT CAPTURED IMAGE AND IMAGE IDENTIFICATION INFORMATION TO COMMUNICATION TERMINAL** — S169

END

EP 4 529 204 A1

# FIG. 29A

```
        ┌─────────┐
        │  START  │
        └────┬────┘
             │
             ▼                              S181
      ╱───────────────╲
     ╱     IMAGE        ╲
    ╱   RECEIVED FROM    ╲   NO
    ╲  IMAGE CAPTURING   ╱────────────────────────┐
     ╲   APPARATUS?     ╱                          │
      ╲───────┬───────╱                            │
              │ YES                                │
              ▼                         S182        │
      ╱───────────────╲                            │
     ╱     IMAGE        ╲                           │
    ╱    PROCESSING      ╲   NO                     │
    ╲  NECESSARY AND     ╱──────────┐              │
     ╲   FEASIBLE?      ╱           │               │
      ╲───────┬───────╱            │               │
              │ YES                │               │
              ▼  S184              │               │
  ┌───────────────────────────┐   │               │
  │ IMAGE PROCESSING BASED ON │   │               │
  │   IMAGE IDENTIFICATION    │   │               │
  │     INFORMATION AND       │   │               │
  │ COMMUNICATION-TERMINAL-SIDE│  │               │
  │    IMAGE PROCESSING       │   │               │
  │      INFORMATION          │   │               │
  └─────────────┬─────────────┘   │               │
                │                  ▼  S183         │
                │     ┌───────────────────────────┐│
                │     │   TRANSMIT RECEIVED        ││
                │     │ IMAGE, IMAGE IDENTIFICA-   ││
                │     │ TION INFORMATION, AND      ││
                │     │ MANAGEMENT INFORMATION     ││
                │     │      TO SERVER             ││
                │     └─────────────┬─────────────┘│
                ▼  S185             │               │
  ┌───────────────────────────┐    │               │
  │   TRANSMIT PROCESSED       │    │               │
  │ IMAGE, IMAGE IDENTIFICATION│    │               │
  │ INFORMATION, AND MANAGEMENT│    │               │
  │   INFORMATION TO SERVER    │    │               │
  └─────────────┬─────────────┘    │               │
                │                   │               │
                └──────────┬────────┴───────────────┘
                           ▼
                      ┌─────────┐
                      │   END   │
                      └─────────┘
```

# FIG. 29B

```
        ┌─────────┐
        │  START  │
        └────┬────┘
             │
             ▼                              S191
      ╱───────────────╲
     ╱     IMAGE        ╲
    ╱ RECEIVED FROM IMAGE╲   NO
    ╲ CAPTURING APPARATUS╱────────────────────────┐
     ╲  OR INTERMEDIARY ╱                          │
      ╲   APPARATUS?    ╱                           │
       ╲──────┬────────╱                            │
              │ YES                                 │
              ▼                         S192         │
      ╱───────────────╲                            │
     ╱     IMAGE        ╲                           │
    ╱    PROCESSING      ╲   NO                     │
    ╲   NECESSARY?       ╱──────────┐              │
     ╲                  ╱           │               │
      ╲───────┬───────╱            │               │
              │ YES                │               │
              ▼  S193              │               │
  ┌───────────────────────────┐   │               │
  │  IMAGE PROCESSING BASED    │   │               │
  │  ON IMAGE IDENTIFICATION   │   │               │
  │     INFORMATION AND        │   │               │
  │    SERVER-SIDE IMAGE       │   │               │
  │   PROCESSING INFORMATION   │   │               │
  └─────────────┬─────────────┘   │               │
                │                  │               │
                ▼  S194            │               │
  ┌───────────────────────────┐   │               │
  │         STORE              │   │               │
  │ IMAGE, IMAGE IDENTIFICATION│   │               │
  │ INFORMATION, AND MANAGEMENT│   │               │
  │ INFORMATION IN ASSOCIATION │   │               │
  │  WITH TRANSMISSION SOURCE  │   │               │
  └─────────────┬─────────────┘   │               │
                │                  │               │
                └──────────┬───────┴───────────────┘
                           ▼
                      ┌─────────┐
                      │   END   │
                      └─────────┘
```

EP 4 529 204 A1

# FIG. 30

START

↓

SERVER REGISTERED AS TRANSMISSION DESTINATION?  S201 — NO →

YES

↓

TRANSMISSION TIME?  S202 — NO →

YES

S203

TRANSMIT DEVICE INFORMATION ASSOCIATED WITH SERVER TO SERVER

DEVICE INFORMATION REQUEST FROM COMMUNICATION TERMINAL?  S204 — NO →

YES

S205

TRANSMIT DEVICE INFORMATION ASSOCIATED WITH COMMUNICATION TERMINAL TO COMMUNICATION TERMINAL

↓

END

# FIG. 31A

# FIG. 31B

■DEVICE STATE

NUMBER OF ERROR OCCURRENCES — 2051

TEMPERATURE
CHANGE OF BOARD — 2053

TEMPERATURE
CHANGE OF BATTERY — 2055

REMAINING
BATTERY LEVEL — 2057

REMAINING
STORAGE LEVEL — 2059

■DEVICE USE STATUS

NUMBER OF TIMES
OF TURNING ON
AND OFF POWER — 2061

NUMBER OF
UPLOADS OF IMAGES — 2063

2000

# FIG. 32

TOTAL NUMBER
OF MEMBERS

918
Total ↑22 (+2%) ⑦

2010

TOTAL NUMBER
OF DEVICES

918
Total ↑22 (+2%) ⑦

2020

TOTAL NUMBER OF
ACCUMULATED IMAGES

918
Total ↑22 (+2%) ⑦

2030

NUMBER OF MEMBERS
(TOTAL/ACTIVE)

2015

NUMBER OF DEVICES
(TOTAL/ACTIVE)

2025

NUMBER OF
ACCUMULATED IMAGES

15,221  17,749  22,027  24,153  26,071

2035

2000

# FIG. 33

■APPLICATION USE STATUS — 2000

2071 — NUMBER OF
UPLOADS OF IMAGES

2073 — NUMBER OF IMAGE
CAPTURING SESSIONS
(APPLICATION)

2075 — NUMBER OF
CONNECTIONS BETWEEN
APPLICATION AND IMAGE
CAPTURING APPARATUS

2077 — NUMBER OF LOGINS
(WEB/MOBILE)

# FIG. 34

IMAGE PROCESSING SYSTEM 1

SERVER 50

100

COMMUNICATION NETWORK

70

10

70A

70B

EP 4 529 204 A1

FIG. 35

IMAGE PROCESSING SYSTEM 1

SERVER 50

100

COMMUNICATION NETWORK

COMMUNICATION TERMINAL 90

70

10

70A

70B

EP 4 529 204 A1

Europäisches
Patentamt
European
Patent Office
Office européen
des brevets

# EUROPEAN SEARCH REPORT

**Application Number**

EP 24 20 1915

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/281550 A1 (MITO KOJI [JP]) 1 October 2015 (2015-10-01) | 1,2,4,5, 7,9-13 | INV. H04N23/661 |
| Y | * paragraphs [0066], [0070], [0071], [0085], [0086], [0099], [0111] - [0114]; figure 2 * | 3,6,8, 11,14 | |
| Y | US 10 911 747 B1 (KISS AKOS [HU] ET AL) 2 February 2021 (2021-02-02) * figure 2 * | 3,6,8, 11,14 | |
| A | US 2017/324893 A1 (MATSUDA KOTARO [JP]) 9 November 2017 (2017-11-09) * paragraph [0026] - paragraph [0091] * | 1-14 | |

**TECHNICAL FIELDS SEARCHED (IPC)**

H04N

The present search report has been drawn up for all claims

| Place of search | Date of completion of the search | Examiner |
|---|---|---|
| Munich | 21 January 2025 | Foraboschi, A |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

# EP 4 529 204 A1

## ANNEX TO THE EUROPEAN SEARCH REPORT
## ON EUROPEAN PATENT APPLICATION NO.

EP 24 20 1915

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2025

| Patent document cited in search report | | Publication date | Patent family member(s) | | Publication date |
|---|---|---|---|---|---|
| US 2015281550 | A1 | 01-10-2015 | JP | 2015195509 A | 05-11-2015 |
| | | | US | 2015281550 A1 | 01-10-2015 |
| US 10911747 | B1 | 02-02-2021 | NONE | | |
| US 2017324893 | A1 | 09-11-2017 | JP | 2017201753 A | 09-11-2017 |
| | | | US | 2017324893 A1 | 09-11-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022081952 A